# EUROPEAN PATENT APPLICATION

(11) **EP 4 764 797 A1**
(43) Date of publication of application: **24.06.2026**
(21) Application number: 24923283.6
(22) Date of filing: 30.08.2024
(51) Int. Cl.: G06F 3/0481, G06F 3/0488, G06F 3/0354, G06T 11/60

(54) **INTERACTION METHOD, STYLUS, AND ELECTRONIC DEVICE**

(30) Priority: 05.02.2024 CN 202410171798; 05.08.2024 CN 202411075024
(71) Applicant: HUAWEI TECHNOLOGIES CO., LTD., Shenzhen 518129 (CN)
(72) Inventor: YUAN, Quan, Shenzhen, Guangdong 518129 (CN); ZHENG, Tao, Shenzhen, Guangdong 518129 (CN); HU, Xihao, Shenzhen, Guangdong 518129 (CN)
(74) Representative: Maiwald GmbH
(86) International application number: PCT/CN2024/116104
(87) International publication number: WO 2025/167073

(57) **Abstract**

Disclosed are an interaction method, a stylus, and an electronic device, which relate to the field of terminal technologies, and are capable of enriching interaction modes between the stylus and the electronic device, and simulating drawing techniques in some specific scenarios, for example, a splash-ink technique. The method includes: The stylus receives a target operation, where the target operation includes one of a flick operation, a tap operation, and a pinch operation; the stylus sends target information to the electronic device in response to the target operation, where the target information is generated based on the target operation; and the electronic device displays an ink trace based on a position of the stylus on a display of the electronic device in response to the target information.

## Description

This application claims priorities to Chinese Patent Application No. 202410171798.X, filed with the China National Intellectual Property Administration on February 5, 2024 and entitled "INTERACTION METHOD, STYLUS, AND ELECTRONIC DEVICE", and to Chinese Patent Application No. 202411075024.3, filed with the China National Intellectual Property Administration on August 5, 2024, and entitled "INTERACTION METHOD, STYLUS, AND ELECTRONIC DEVICE", both of which are incorporated herein by reference in their entireties.

### TECHNICAL FIELD

This application relates to the field of terminal technologies, and in particular, to an interaction method, a stylus, and an electronic device.

### BACKGROUND

Currently, after a stylus establishes a connection to an electronic device, a user may perform a drawing operation on the electronic device by using the stylus. In a drawing process, the stylus may draw lines with different textures by touching a screen of the electronic device. However, this interaction mode is relatively simple, and drawing techniques in some specific drawing scenarios cannot be simulated.

### SUMMARY

This application provides an interaction method, a stylus, and an electronic device, to enrich interaction modes between the stylus and the electronic device and simulate drawing techniques in some specific scenarios, for example, a splash-ink technique.

To achieve the foregoing objectives, this application uses the following technical solutions.

According to a first aspect, an interaction method is provided, and applied to a system including an electronic device and a stylus. The electronic device is equipped with a display, and a connection is established between the electronic device and the stylus. The method includes: The stylus receives a target operation, where the target operation includes one of a tap operation, a flick operation, and a pinch operation; the stylus sends target information to the electronic device in response to the target operation, where the target information is generated based on the target operation; and the electronic device displays an ink trace based on a position of the stylus on the display in response to the target information.

Based on the foregoing technical solution, when the stylus receives the tap operation, the flick operation, or the pinch operation, the stylus may send, to the electronic device in response to the operation, the target information generated based on the tap operation or the flick operation. Then the electronic device may display the ink trace based on the position of the stylus on the display in response to the target information. In this way, a user can draw the ink trace on the electronic device by performing the tap operation, the flick operation, or the pinch operation on the stylus, so that interaction modes between the stylus and the electronic device can be enriched. This interaction mode can simulate drawing techniques in some specific drawing scenarios, to improve user experience.

In a possible design, the target operation is the tap operation, and the target information includes information used to represent at least one of a tap event and a tap force corresponding to the tap operation; or the target operation is the pinch operation, and the target information includes information used to represent at least one of a pinch event and a pinch force corresponding to the pinch operation; or the target operation is the flick operation, and the target information includes information used to represent at least one of a flick event, a flick force, a flick amplitude, and a flick direction corresponding to the flick operation. Based on this design, when the tap operation is performed on the stylus, the stylus may send, to the electronic device, the information used to represent at least one of the tap event and the tap force corresponding to the tap operation; when the pinch operation is performed on the stylus, the stylus may send, to the electronic device, the information used to represent at least one of the pinch event and the pinch force corresponding to the pinch operation; or when the flick operation is performed on the stylus, the stylus may send, to the electronic device, the information used to represent at least one of the flick event, the flick force, the flick amplitude, and the flick direction corresponding to the flick operation, so that the electronic device can display the ink trace based on the foregoing information. In this way, when different operations are performed on the stylus, an effect of the displayed ink trace may vary, and the effect of the displayed ink trace can better match that of an ink trace in an actual splash-ink scenario.

In a possible design, the target operation is the tap operation or the pinch operation, and the ink trace is an ink patch; or the target operation is the flick operation, and the ink trace is an ink streak. Based on this design, when the operation received by the stylus is the tap operation or the pinch operation, the ink trace presented by the electronic device is the ink patch; or when the operation received by the stylus is the flick operation, the ink trace presented by the electronic device is the ink streak. In this way, the ink trace is presented with different effects in different interaction modes, that is, the ink trace corresponds to the interaction mode. This better aligns with a principle of a realistic splash-ink technique, and can achieve a better simulation effect.

In a possible design, that the electronic device displays the ink trace based on the position of the stylus on the display in response to the target information includes: When a hover coordinate is obtained based on the position of the stylus on the display, the electronic device displays the ink trace in a target display area in response to the target information, where the target display area is related to the hover coordinate, and the hover coordinate is a corresponding coordinate on the display when the stylus hovers over the display to receive the target operation. Based on this design, when the electronic device can obtain the corresponding coordinate on the display when the stylus hovers over the display of the electronic device, the electronic device displays, in response to the target information, the ink trace in the display area related to the coordinate, that is, displays the ink trace based on the coordinate. In this way, the displayed ink trace can be related to the coordinate. In an actual splash-ink technique, a splash-ink trace is related to a splash position, and the foregoing coordinate may simulate the splash position, so that an effect of the ink trace can better match a splash-ink effect in a realistic splash-ink scenario, and that a simulation effect is better.

In a possible design, that the electronic device displays the ink trace based on the position of the stylus on the display in response to the target information includes: When no hover coordinate is obtained based on the position of the stylus on the display, the electronic device randomly displays the ink trace on the display in response to the target information, where the hover coordinate is a corresponding coordinate on the display when the stylus hovers over the display to receive the target operation. In some scenarios, due to an excessively long distance between the stylus and the electronic device, or the like, the electronic device may fail to obtain the corresponding coordinate on the display when the stylus hovers over the display of the electronic device. This scenario is similar to a scenario in which a splash-ink position is excessively far away from a drawing paper in an actual splash-ink technique. In this splash-ink scenario, an ink trace may appear at any position on the drawing paper. Therefore, when the electronic device fails to obtain the corresponding coordinate on the display when the stylus hovers over the display of the electronic device, the electronic device randomly displays the ink trace on the display in response to the target information. A splash-ink technique in an actual drawing scenario may also be simulated.

In a possible design, the ink trace includes a plurality of ink droplets, a first parameter of the ink trace is related to a style of a brush used by the stylus, and the first parameter includes one or more of an ink trace color, an ink droplet size, and an ink droplet intensity. Based on this design, the ink trace color, the ink droplet size, the ink droplet intensity, and the like of the ink trace are related to the style of the brush used by the stylus. These parameters of the ink trace determine a style of the ink trace, that is, the style of the ink trace may be determined based on the style of the brush. In this way, when the user uses different brushes, styles of ink traces presented by the electronic device may be different. Requirements of the user in different drawing scenarios can be met, and a better simulation effect can also be achieved.

In a possible design, the ink trace includes a plurality of ink droplets, a second parameter of the ink trace is related to the target operation, and the second parameter includes one or more of an ink trace range, an ink trace length, an ink trace direction, an ink droplet size, an ink droplet density, and an ink droplet intensity. Based on this design, the ink trace range, the ink trace length, the ink trace direction, the ink droplet size, the ink droplet density, the ink droplet intensity, and the like of the ink trace are related to the operation received by the stylus. These parameters of the ink trace determine a style of the ink trace, that is, the style of the ink trace may be determined based on a style of a brush. In this way, when the user uses different brushes, styles of ink traces presented by the electronic device may be different. Requirements of the user in different drawing scenarios can be met. In addition, in an actual drawing scenario, an effect of the ink trace is also related to a style of a used brush (such as a brush pen or a fountain pen). This can also achieve a better simulation effect.

In a possible design, the target operation is the tap operation, a parameter of the tap operation includes the tap force, and at least one of the ink trace range, the ink droplet size, the ink droplet density, and the ink droplet intensity of the ink trace is positively correlated with the tap force; or the target operation is the pinch operation, a parameter of the pinch operation includes the pinch force, and at least one of the ink trace range, the ink droplet size, the ink droplet density, and the ink droplet intensity of the ink trace is positively correlated with the pinch force; or the target operation is the flick operation, a parameter of the flick operation includes at least one of the flick amplitude and the flick force, and at least one of the ink trace length, the ink droplet size, the ink droplet density, and the ink droplet intensity of the ink trace is positively correlated with at least one of the flick amplitude and the flick force. Based on this design, at least one of the ink trace range, the ink droplet size, the ink droplet density, and the ink droplet intensity of the ink trace is positively correlated with the tap force or the pinch force, or at least one of the ink trace length, the ink droplet size, the ink droplet density, and the ink droplet intensity of the ink trace is positively correlated with at least one of the flick amplitude and the flick force, that is, the parameter of the ink trace is set to be positively correlated with the tap force, the pinch force, the flick amplitude, the flick force, or the like. This aligns with intuitive thinking of the user, so that the user can master the operation more easily. In addition, this better aligns with a principle of a realistic splash-ink technique, and can achieve a better simulation effect.

In a possible design, the target operation is the flick operation, and the ink trace direction of the ink trace is the same as the flick direction of the flick operation. Based on this design, when the stylus receives the flick operation, the ink trace direction of the ink trace presented by the electronic device is the same as the flick direction of the flick operation. This better aligns with a presentation principle of an ink trace in a realistic splash-ink technique, so that a better ink trace effect can be achieved.

In a possible design, one or more of the ink trace length, the ink droplet size, the ink droplet density, and the ink droplet intensity of the ink trace are related to a hover coordinate, and the hover coordinate is a corresponding coordinate on the display when the stylus hovers over the display to receive the target operation. In an actual splash-ink technique, a style of a splash-ink trace is related to a splash position. Based on this design, one or more of the ink trace length, the ink droplet size, the ink droplet density, and the ink droplet intensity of the ink trace are related to the hover coordinate. These parameters determine an effect of the ink trace, and the hover coordinate may simulate the splash position. In this way, the effect of the ink trace can better match a splash-ink effect in a realistic splash-ink scenario, so that a simulation effect is better.

In a possible design, the target operation is the tap operation or the pinch operation, and the ink trace includes a first ink trace and a second ink trace, where a distance between the first ink trace and the hover coordinate is less than a distance between the second ink trace and the hover coordinate, and an ink droplet size of the first ink trace is greater than an ink droplet size of the second ink trace, and/or an ink droplet density of the first ink trace is higher than an ink droplet density of the second ink trace, and/or an ink droplet intensity of the first ink trace is higher than an ink droplet intensity of the second ink trace. Based on this design, when the stylus receives the tap operation or the pinch operation, the ink trace presented by the electronic device includes the first ink trace and the second ink trace, where the distance between the first ink trace and the hover coordinate is less than the distance between the second ink trace and the hover coordinate, and the ink droplet size of the first ink trace is greater than the ink droplet size of the second ink trace, and/or the ink droplet density of the first ink trace is higher than the ink droplet density of the second ink trace, and/or the ink droplet intensity of the first ink trace is higher than the ink droplet intensity of the second ink trace. In other words, the ink trace closer to the hover coordinate has a higher ink droplet density, and/or a larger ink droplet size, and/or a higher ink droplet intensity, and the like. In this way, the presented ink trace can align with a principle of ink trace presentation in a realistic splash-ink technique, or align with a principle of ink dripping, so that a simulation effect is better.

In a possible design, the target operation is the flick operation, the hover coordinate includes a first hover coordinate, the first hover coordinate is a hover coordinate when the stylus receives the flick operation and starts to flick, and the ink trace includes a third ink trace and a fourth ink trace, where a distance between the third ink trace and the first hover coordinate is less than a distance between the fourth ink trace and the first hover coordinate, and an ink droplet size of the third ink trace is greater than an ink droplet size of the fourth ink trace, and/or an ink droplet density of the third ink trace is higher than an ink droplet density of the fourth ink trace, and/or an ink droplet intensity of the third ink trace is higher than an ink droplet intensity of the fourth ink trace. Based on this design, when the stylus receives the flick operation, the ink trace presented by the electronic device includes the third ink trace and the fourth ink trace, and a distance between the third ink trace and a start hover coordinate is less than a distance between the fourth ink trace and the start hover coordinate. In other words, the third ink trace is closer to the start hover coordinate. The ink droplet size of the third ink trace is greater than the ink droplet size of the fourth ink trace, and/or the ink droplet density of the third ink trace is higher than the ink droplet density of the fourth ink trace, and/or the ink droplet intensity of the third ink trace is higher than the ink droplet intensity of the fourth ink trace. In other words, an ink trace closer to the start hover coordinate is presented with a higher ink droplet density, and/or a larger ink droplet size, and/or a higher ink droplet intensity, and the like. In this way, the presented ink trace can align with a principle of ink trace presentation in a realistic splash-ink technique, so that a simulation effect is better.

In a possible design, before the stylus sends the target information to the electronic device in response to the target operation, the method further includes: The electronic device displays a running interface of a first application, where the stylus is configured to draw on the running interface. For example, the first application may be a drawing application or the like. Based on this design, when the electronic device presents the running interface of the first application, the electronic device presents the ink trace only when the stylus receives the tap operation, the flick operation, or the pinch operation, to simulate drawing techniques in some specific scenarios. This can avoid presentation of an ink trace by the electronic device when the user touches the electronic device normally by using the stylus, that is, when the stylus receives the tap operation, the flick operation, or the pinch operation in a non-drawing scenario, which otherwise affects a normal operation of the user and reduces user experience.

In a possible design, the target operation is the tap operation, and a second parameter of the ink trace is related to an orientation of a stylus tip when the stylus receives the tap operation. In an actual splash-ink technique, a splash-ink trace is related to a splash direction, and the orientation of the stylus tip may simulate the splash direction. In this way, when the stylus receives the tap operation, the second parameter of the ink trace presented by the electronic device is related to the orientation of the stylus tip when the stylus receives the tap operation, that is, a style of the ink trace presented by the electronic device is related to the orientation of the stylus tip when the stylus receives the tap operation. In this way, an effect of the ink trace can better match that of an ink trace in an actual splash-ink scenario.

In a possible design, the ink trace includes a fifth ink trace and a sixth ink trace, where the fifth ink trace is displayed in a display area on the display in a direction same as the orientation of the stylus tip, the sixth ink trace is displayed in a display area on the display in a direction different from the orientation of the stylus tip, and an ink trace range of the fifth ink trace is greater than an ink trace range of the sixth ink trace, and/or an ink droplet intensity of the fifth ink trace is higher than an ink droplet intensity of the sixth ink trace, and/or an ink droplet size of the fifth ink trace is greater than an ink droplet size of the sixth ink trace. Based on this design, in the direction same as the orientation of the stylus tip, the presented ink trace range is larger, and/or an ink droplet density is higher, and/or the ink droplet intensity is higher, and the like. In this way, the presented ink trace can align with a principle of ink trace presentation in a realistic splash-ink technique, so that a simulation effect is better.

According to a second aspect, an interaction method is provided, and applied to an electronic device including a display. A connection is established between the electronic device and a stylus. The method includes: receiving target information from the stylus, where the target information is generated based on a target operation on the stylus, and the target operation includes one of a tap operation, a flick operation, and a pinch operation; and displaying an ink trace based on a position of the stylus on the display in response to the target information.

In a possible design, the target operation is the tap operation, and the target information includes information used to represent at least one of a tap event and a tap force corresponding to the tap operation; or the target operation is the pinch operation, and the target information includes information used to represent at least one of a pinch event and a pinch force corresponding to the pinch operation; or the target operation is the flick operation, and the target information includes information used to represent at least one of a flick event, a flick force, a flick amplitude, and a flick direction corresponding to the flick operation.

In a possible design, the target operation is the tap operation or the pinch operation, and the ink trace is an ink patch; or the target operation is the flick operation, and the ink trace is an ink streak.

In a possible design, displaying the ink trace based on the position of the stylus on the display in response to the target information includes: when a hover coordinate is obtained based on the position of the stylus on the display, displaying the ink trace in a target display area in response to the target information, where the target display area is related to the hover coordinate, and the hover coordinate is a corresponding coordinate on the display when the stylus hovers over the display to receive the target operation.

In a possible design, displaying the ink trace based on the position of the stylus on the display in response to the target information includes: when no hover coordinate is obtained based on the position of the stylus on the display, randomly displaying the ink trace on the display in response to the target information, where the hover coordinate is a corresponding coordinate on the display when the stylus hovers over the display to receive the target operation.

In a possible design, the ink trace includes a plurality of ink droplets, a first parameter of the ink trace is related to a style of a brush used by the stylus, and the first parameter includes one or more of an ink trace color, an ink droplet size, and an ink droplet intensity.

In a possible design, the ink trace includes a plurality of ink droplets, a second parameter of the ink trace is related to the target operation, and the second parameter includes one or more of an ink trace range, an ink trace length, an ink trace direction, an ink droplet size, an ink droplet density, and an ink droplet intensity.

In a possible design, the target operation is the tap operation, a parameter of the tap operation includes the tap force, and at least one of the ink trace range, the ink droplet size, the ink droplet density, and the ink droplet intensity of the ink trace is positively correlated with the tap force; or the target operation is the pinch operation, a parameter of the pinch operation includes the pinch force, and at least one of the ink trace range, the ink droplet size, the ink droplet density, and the ink droplet intensity of the ink trace is positively correlated with the pinch force; or the target operation is the flick operation, a parameter of the flick operation includes at least one of the flick amplitude and the flick force, and at least one of the ink trace length, the ink droplet size, the ink droplet density, and the ink droplet intensity of the ink trace is positively correlated with at least one of the flick amplitude and the flick force.

In a possible design, the target operation is the flick operation, and the ink trace direction of the ink trace is the same as the flick direction of the flick operation.

In a possible design, one or more of the ink trace length, the ink droplet size, the ink droplet density, and the ink droplet intensity of the ink trace are related to a hover coordinate, and the hover coordinate is a corresponding coordinate on the display when the stylus hovers over the display to receive the target operation.

In a possible design, the target operation is the tap operation or the pinch operation, and the ink trace includes a first ink trace and a second ink trace, where a distance between the first ink trace and the hover coordinate is less than a distance between the second ink trace and the hover coordinate, and an ink droplet size of the first ink trace is greater than an ink droplet size of the second ink trace, and/or an ink droplet density of the first ink trace is higher than an ink droplet density of the second ink trace, and/or an ink droplet intensity of the first ink trace is higher than an ink droplet intensity of the second ink trace.

In a possible design, the target operation is the flick operation, the hover coordinate includes a first hover coordinate, the first hover coordinate is a hover coordinate when the stylus receives the flick operation and starts to flick, and the ink trace includes a third ink trace and a fourth ink trace, where a distance between the third ink trace and the first hover coordinate is less than a distance between the fourth ink trace and the first hover coordinate, and an ink droplet size of the third ink trace is greater than an ink droplet size of the fourth ink trace, and/or an ink droplet density of the third ink trace is higher than an ink droplet density of the fourth ink trace, and/or an ink droplet intensity of the third ink trace is higher than an ink droplet intensity of the fourth ink trace.

In a possible design, before receiving the target information from the stylus, the method further includes: The electronic device displays a running interface of a first application, where the stylus is configured to draw on the running interface.

In a possible design, the target operation is the tap operation, and a second parameter of the ink trace is related to an orientation of a stylus tip when the stylus receives the tap operation.

In a possible design, the ink trace includes a fifth ink trace and a sixth ink trace, where the fifth ink trace is displayed in a display area on the display in a direction same as the orientation of the stylus tip, the sixth ink trace is displayed in a display area on the display in a direction different from the orientation of the stylus tip, and an ink trace range of the fifth ink trace is greater than an ink trace range of the sixth ink trace, and/or an ink droplet intensity of the fifth ink trace is higher than an ink droplet intensity of the sixth ink trace, and/or an ink droplet size of the fifth ink trace is greater than an ink droplet size of the sixth ink trace.

According to a third aspect, an interaction method is provided, and applied to a stylus. A connection is established between the stylus and an electronic device. The method includes: receiving a target operation, where the target operation includes one of a tap operation, a flick operation, and a pinch operation; and sending target information to the electronic device in response to the target operation, where the target information is used by the electronic device to display an ink trace based on a position of the stylus on a display of the electronic device.

In a possible design, the target operation is the tap operation, and the target information includes information used to represent at least one of a tap event and a tap force corresponding to the tap operation; or the target operation is the pinch operation, and the target information includes information used to represent at least one of a pinch event and a pinch force corresponding to the pinch operation; or the target operation is the flick operation, and the target information includes information used to represent at least one of a flick event, a flick force, a flick amplitude, and a flick direction corresponding to the flick operation.

In a possible design, the target operation is the tap operation or the pinch operation, and the ink trace is an ink patch; or the target operation is the flick operation, and the ink trace is an ink streak.

In a possible design, the ink trace includes a plurality of ink droplets, a first parameter of the ink trace is related to a style of a brush used by the stylus, and the first parameter includes one or more of an ink trace color, an ink droplet size, and an ink droplet intensity.

In a possible design, the ink trace includes a plurality of ink droplets, a second parameter of the ink trace is related to the target operation, and the second parameter includes one or more of an ink trace range, an ink trace length, an ink trace direction, an ink droplet size, an ink droplet density, and an ink droplet intensity.

In a possible design, the target operation is the tap operation, a parameter of the tap operation includes the tap force, and at least one of the ink trace range, the ink droplet size, the ink droplet density, and the ink droplet intensity of the ink trace is positively correlated with the tap force; or the target operation is the pinch operation, a parameter of the pinch operation includes the pinch force, and at least one of the ink trace range, the ink droplet size, the ink droplet density, and the ink droplet intensity of the ink trace is positively correlated with the pinch force; or the target operation is the flick operation, a parameter of the flick operation includes at least one of the flick amplitude and the flick force, and at least one of the ink trace length, the ink droplet size, the ink droplet density, and the ink droplet intensity of the ink trace is positively correlated with at least one of the flick amplitude and the flick force.

In a possible design, the target operation is the flick operation, and the ink trace direction of the ink trace is the same as the flick direction of the flick operation.

In a possible design, one or more of the ink trace length, the ink droplet size, the ink droplet density, and the ink droplet intensity of the ink trace are related to a hover coordinate, and the hover coordinate is a corresponding coordinate on the display when the stylus hovers over the display to receive the target operation.

In a possible design, the target operation is the tap operation or the pinch operation, and the ink trace includes a first ink trace and a second ink trace, where a distance between the first ink trace and the hover coordinate is less than a distance between the second ink trace and the hover coordinate, and an ink droplet size of the first ink trace is greater than an ink droplet size of the second ink trace, and/or an ink droplet density of the first ink trace is higher than an ink droplet density of the second ink trace, and/or an ink droplet intensity of the first ink trace is higher than an ink droplet intensity of the second ink trace.

In a possible design, the target operation is the flick operation, the hover coordinate includes a first hover coordinate, the first hover coordinate is a hover coordinate when the stylus receives the flick operation and starts to flick, and the ink trace includes a third ink trace and a fourth ink trace, where a distance between the third ink trace and the first hover coordinate is less than a distance between the fourth ink trace and the first hover coordinate, and an ink droplet size of the third ink trace is greater than an ink droplet size of the fourth ink trace, and/or an ink droplet density of the third ink trace is higher than an ink droplet density of the fourth ink trace, and/or an ink droplet intensity of the third ink trace is higher than an ink droplet intensity of the fourth ink trace.

In a possible design, the target operation is the tap operation, and a second parameter of the ink trace is related to an orientation of a stylus tip when the stylus receives the tap operation.

In a possible design, the ink trace includes a fifth ink trace and a sixth ink trace, where the fifth ink trace is displayed in a display area on the display in a direction same as the orientation of the stylus tip, the sixth ink trace is displayed in a display area on the display in a direction different from the orientation of the stylus tip, and an ink trace range of the fifth ink trace is greater than an ink trace range of the sixth ink trace, and/or an ink droplet intensity of the fifth ink trace is higher than an ink droplet intensity of the sixth ink trace, and/or an ink droplet size of the fifth ink trace is greater than an ink droplet size of the sixth ink trace.

According to a fourth aspect, an interaction method is provided, and applied to a system including an electronic device and a stylus. The electronic device is equipped with a display, and a connection is established between the electronic device and the stylus. The method includes: The stylus moves above the display, where a distance between the stylus and the display is greater than a preset distance; and the electronic device displays an ink trace on the display in response to the movement of the stylus. In this way, a contactless drawing effect can be achieved, and interaction experience is better.

In a possible design, that the electronic device displays the ink trace on the display in response to the movement of the stylus includes: The electronic device obtains at least one hover coordinate in response to the movement of the stylus, where the hover coordinate is a corresponding coordinate on the display during the movement of the stylus above the display; and the electronic device displays the ink trace on the display based on the at least one hover coordinate.

In a possible design, that the electronic device obtains the at least one hover coordinate includes: The electronic device obtains the at least one hover coordinate based on a signal sent from an electrode of the stylus.

In a possible design, the ink trace includes a plurality of ink droplets, a first parameter of the ink trace is related to a style of a brush used by the stylus, and the first parameter includes one or more of an ink trace color, an ink droplet size, and an ink droplet intensity.

In a possible design, the ink trace includes a plurality of ink droplets, a third parameter of the ink trace is related to a distance between the stylus and the display, and the third parameter includes one or more of an ink droplet size, an ink droplet density, and an ink droplet intensity.

In a possible design, one or more of the ink droplet size, the ink droplet density, and the ink droplet intensity of the ink trace are negatively correlated with the distance between the stylus and the display.

According to a fifth aspect, an interaction method is provided, and applied to a display including an electronic device. A connection is established between the electronic device and a stylus. The method includes: obtaining at least one hover coordinate, where the hover coordinate is a corresponding coordinate on the display during movement of the stylus above the display; and displaying an ink trace on the display in response to the at least one hover coordinate.

For another design of the fifth aspect, refer to a corresponding design of the fourth aspect.

According to a sixth aspect, an apparatus is provided. The apparatus has a function of implementing the method performed by the electronic device or a function of implementing the method performed by the stylus in any design of any one of the foregoing aspects. The function may be implemented by hardware, or may be implemented by hardware by executing corresponding software. The hardware or software includes one or more modules corresponding to the foregoing function. In a possible example, the apparatus includes a communication unit (or referred to as a communication module) and a processing unit (or referred to as a processing module). The communication unit is configured to perform a communication operation in the method according to any design in any one of the foregoing aspects. The processing unit is configured to perform a processing operation in the method according to any design in any one of the foregoing aspects.

According to a seventh aspect, an electronic device is provided and includes a processor, a memory, a communication interface, and a display. The memory, the communication interface, and the display are coupled to the processor. The communication interface is configured to communicate with another device. The memory is configured to store computer program code, where the computer program code includes computer instructions. The processor reads the computer instructions from the memory, to enable the electronic device to perform the method performed by the electronic device according to any design in any one of the foregoing aspects.

According to an eighth aspect, a stylus is provided and includes a processor, a memory, and a communication interface. The memory and the communication interface are coupled to the processor. The communication interface is configured to communicate with another device. The memory is configured to store computer program code, where the computer program code includes computer instructions. The processor reads the computer instructions from the memory, to enable the stylus to perform the method performed by the stylus according to any design in any one of the foregoing aspects.

In a possible design, the stylus may further include a sensor. The sensor may be configured to collect information used to represent one or more of a tap force, a pinch force, a flick force, a flick amplitude, and a flick direction.

Optionally, in the seventh aspect or the eighth aspect, the memory may be coupled to the processor, or may be independent of the processor. For example, the communication interface may be a transceiver, an input/output interface, an interface circuit, an output circuit, an input circuit, a pin, a related circuit, or the like.

According to a ninth aspect, a computer-readable storage medium is provided. The computer-readable storage medium includes a computer program or instructions. When the computer program or the instructions are run on an electronic device, the electronic device is enabled to perform the method performed by the electronic device according to any design in any one of the foregoing aspects. Alternatively, when the computer program or instructions are run on a stylus, the stylus is enabled to perform the method performed by the stylus according to any design in any one of the foregoing aspects.

According to a tenth aspect, a computer program product is provided. When the computer program product is run on a computer, the computer is enabled to perform the method performed by the electronic device or the stylus according to any design in any one of the foregoing aspects.

According to an eleventh aspect, a chip system is provided and includes at least one processor and at least one interface circuit. The at least one interface circuit is configured to perform a transceiver function, and send instructions to the at least one processor. When the at least one processor executes the instructions, the at least one processor performs the method performed by the electronic device or the stylus according to any design in any one of the foregoing aspects.

According to a twelfth aspect, an interaction system is provided and includes an electronic device and a stylus. The electronic device is configured to perform the method according to any design in the second aspect, and the stylus is configured to perform the method according to any design in the third aspect. Alternatively, the electronic device cooperates with the stylus to implement the method according to any design in any one of the foregoing aspects.

It should be noted that, for technical effects brought by any one of the designs in the second aspect to the twelfth aspect, refer to technical effects brought by a corresponding design in the first aspect. Details are not described herein again.

### BRIEF DESCRIPTION OF DRAWINGS

FIG. 1 is a diagram of a drawing scenario according to an embodiment of this application;
FIG. 2 is a diagram of an architecture of a communication system according to an embodiment of this application;
FIG. 3 is a diagram of a structure of an electronic device according to an embodiment of this application;
FIG. 4 is a diagram of a structure of a stylus according to an embodiment of this application;
FIG. 5 is a diagram of a structure of another electronic device according to an embodiment of this application;
FIG. 6 is a diagram 1 of an interface according to an embodiment of this application;
FIG. 7 is a diagram 2 of an interface according to an embodiment of this application;
FIG. 8 is a diagram 3 of an interface according to an embodiment of this application;
FIG. 9 is a diagram of a scenario illustrating a stylus usage state according to an embodiment of this application;
FIG. 10 is a diagram 4 of an interface according to an embodiment of this application;
FIG. 11 to FIG. 19G are diagrams 5 to 19 of an interface according to an embodiment of this application;
FIG. 20A is a schematic flowchart of an interaction method according to an embodiment of this application;
FIG. 20B is a schematic flowchart of another interaction method according to an embodiment of this application;
FIG. 21 is a diagram of a structure of another electronic device according to an embodiment of this application;
FIG. 22 is a diagram of a structure of another stylus according to an embodiment of this application; and
FIG. 23 is a diagram of a structure of a chip system according to an embodiment of this application.

### DESCRIPTION OF EMBODIMENTS

Technical solutions provided in embodiments of this application are described in detail below with reference to the accompanying drawings. Terms "include", "have", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the term "example", "for example", or the like is used to represent an example, an instance, or an illustration. Any embodiment or design scheme described as an "example" or "for example" in embodiments of this application should not be construed as being more preferred or advantageous than another embodiment or design scheme. To be precise, use of the terms such as "example" or "for example" is intended to present a relative concept in a specific manner.

In the descriptions of this application, "a plurality of" means two or more than two unless otherwise specified. The term "and/or" in this specification describes only an association relationship between associated objects and represents that three relationships may exist. For example, A and/or B may represent the following three cases: Only A exists, both A and B exist, and only B exists.

To clearly describe the technical solutions in embodiments of this application, terms such as "first" and "second" are used in embodiments of this application to distinguish between same items or similar items having basically same functions and purposes. A person skilled in the art may understand that the terms such as "first" and "second" do not limit a quantity and an execution sequence, and the terms such as "first" and "second" do not indicate a definite difference.

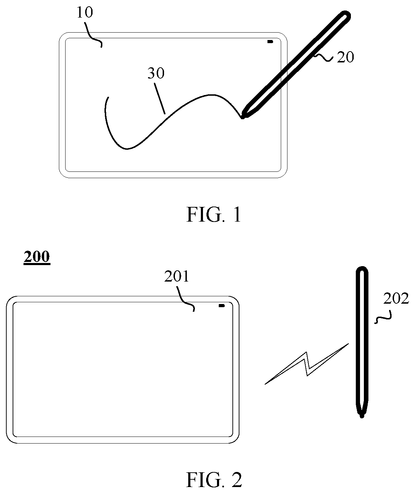

Currently, in a solution in which a stylus is used to perform a drawing operation on an electronic device, lines with different textures are drawn based on a coordinate of contact between the stylus and a screen of the electronic device and based on parameters such as pressure sensitivity and a tilt angle of the stylus. As shown in FIG. 1, an electronic device 10 may draw a line 30 based on a coordinate of a stylus 20 on a screen of the electronic device 10 and parameters such as pressure sensitivity and a tilt angle of the stylus 20. In this solution, an interaction mode between the stylus and the electronic device is simple, and drawing techniques in some specific drawing scenarios cannot be simulated, for example, a splash-ink technique in Chinese painting.

Based on this, an embodiment of this application provides an interaction method, to enrich interaction modes between a stylus and an electronic device, simulate drawing techniques in some specific scenarios, for example, a splash-ink technique, and improve user experience.

For example, FIG. 2 is a diagram of an architecture of a communication system to which an interaction method provided in an embodiment of this application is applied. As shown in FIG. 2, the communication system 200 includes an electronic device 201 and a stylus 202.

The electronic device 201 may be any electronic device having a display. For example, the electronic device 201 may include but is not limited to a smartphone, a netbook, a tablet computer, a handwriting tablet, a smartwatch, a smart band, a phone watch, a smart camera, a palmtop computer, a vehicle-mounted computer, a personal computer (personal computer, PC), a personal digital assistant (personal digital assistant, PDA), a portable multimedia player (portable multimedia player, PMP), an (augmented reality, AR)/virtual reality (virtual reality, VR) device, a smart television, a projection device, or a motion sensing game console in a human-computer interaction scenario. Alternatively, the electronic device 201 may be an electronic device of another type or structure having a display. This is not limited in this application.

The stylus 202 may be configured to perform various writing operations on the electronic device 201, including but not limited to graffiti, drawing, annotation, signature, and the like. Optionally, the stylus 202 may be a resistive stylus, an electromagnetic stylus, or a capacitive stylus. This is not limited in this embodiment of this application.

Optionally, operating systems installed on the electronic device 201 and/or the stylus 202 include but are not limited to iOS^{®}, Android^{®}, HarmonyOS^{®}, Windows^{®}, Linux^{®}, or other operating systems. Certainly, no operating system may be installed on the electronic device 201 and/or the stylus 202. A specific type of the electronic device 201 and/or a specific type of the stylus 202, whether an operating system is installed, and an operating system (if installed) are not limited in this application. Optionally, for electronic devices 201 of different types or different software system versions, the same or different versions and models of the stylus 202 may be adapted.

Optionally, a connection may be established between the electronic device 201 and the stylus 202 in a wired communication mode or a wireless communication mode. For example, the wireless communication mode may include but is not limited to Bluetooth (Bluetooth, BT) (for example, conventional Bluetooth or Bluetooth low energy (Bluetooth low energy, BLE)), and a wireless local area network (wireless local area network, WLAN) (such as a wireless fidelity (wireless fidelity, Wi-Fi) network).

It may be understood that FIG. 2 is merely a simplified diagram of an example for ease of understanding. During actual application, the foregoing system may further include another device, which is not shown in the figure.

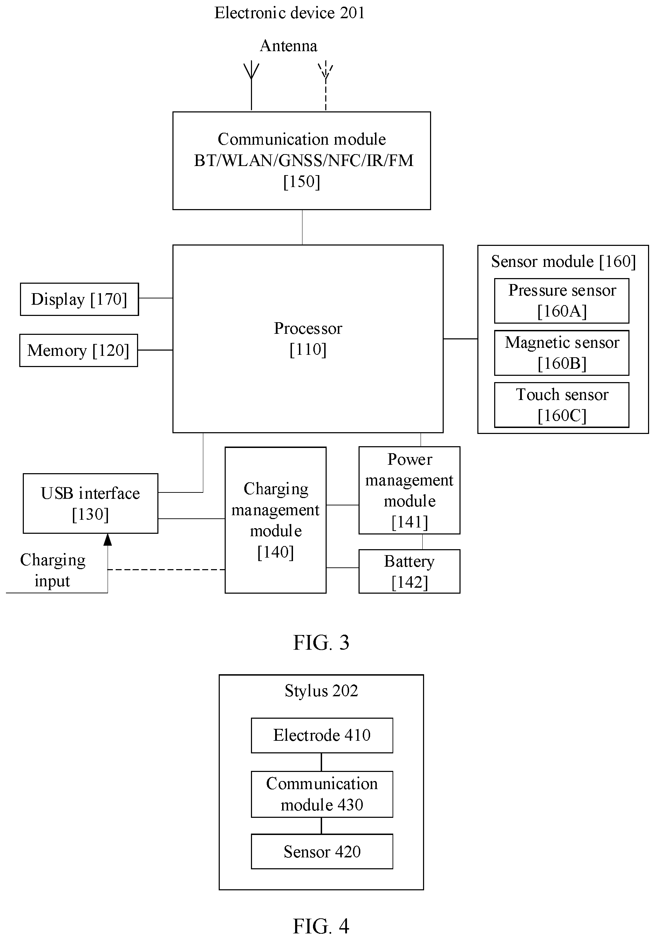

For example, FIG. 3 is a diagram of a structure of the electronic device 201 according to an embodiment of this application.

As shown in FIG. 3, the electronic device 201 may include a processor 110, a memory 120, a universal serial bus (universal serial bus, USB) interface 130, a charging management module 140, a power management module 141, a battery 142, an antenna, a communication module 150, a sensor module 160, a display 170, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control over instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may invoke the instructions or the data directly from the memory. This avoids repeated access, reduces waiting time of the processor 110, and improves system efficiency.

The USB interface 130 is an interface complying with a USB standard. The USB interface 130 may be configured to connect to a charger to charge the electronic device 201, or may be configured to transmit data between the electronic device 201 and a peripheral device.

The charging management module 140 is configured to receive a charging input from a charger.

The power management module 141 is configured to connect to the battery 142, the charging management module 140, and the processor 110. The power management module 141 receives an input from the battery 142 and/or the charging management module 140, and supplies power to the processor 110, the memory 120, the communication module 150, and the like.

A communication function of the electronic device 201 may be implemented by using the antenna, the communication module 150, or the like.

The antenna is configured to transmit and receive electromagnetic wave signals. The communication module 150 may provide a wireless communication solution including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like and applied to the electronic device 201. The communication module 150 may be one or more components integrating at least one communication processing module.

In some embodiments, the antenna of the electronic device 201 is coupled to the communication module 150, so that the electronic device 201 can communicate with a network and another device by using a wireless communication technology. The wireless communication technology may include long term evolution (long term evolution, LTE), BT, a GNSS, a WLAN, NFC, FM, and/or an IR technology, or the like.

In some embodiments of this application, the communication module 150 may be configured to establish a connection to the stylus, and the electronic device 201 may exchange information with the stylus by using the established connection.

The memory 120 may be configured to store computer-executable program code. The executable program code includes instructions. The processor 110 performs various functional applications and data processing of the electronic device 201 by running instructions stored in the memory 120 and/or instructions stored in the memory disposed in the processor.

Optionally, the sensor module 160 includes one or more of a pressure sensor 160A, a magnetic sensor 160B, and a touch sensor 160C.

The pressure sensor 160A is configured to sense a pressure signal and can convert the pressure signal into an electrical signal. In some embodiments, the pressure sensor 160A may be disposed on the display 170. There are many types of pressure sensors 160A, for example, a resistive pressure sensor, an inductive pressure sensor, and a capacitive pressure sensor. The capacitive pressure sensor may include at least two parallel plates made of conductive materials. When a force is applied to the pressure sensor 160A, capacitance between electrodes changes. The electronic device 201 determines pressure intensity based on the change in the capacitance.

The magnetic sensor 160B includes a Hall sensor. The electronic device 201 may detect opening and closing of a flip cover by using the magnetic sensor 160B. In some embodiments of this application, the electronic device 201 may attach the stylus by using the magnetic sensor 160B, thereby attaching the stylus to a fixed position on the electronic device 201.

The touch sensor 180C is also referred to as a "touch component". The touch sensor 180C may be disposed on the display 170. The touch sensor 180C and the display 170 constitute a touchscreen, which is also referred to as a "touch screen". The touch sensor 180C is configured to detect a touch operation on or near the touch sensor.

The electronic device 201 implements a display function by using the GPU, the display 170, the application processor, and the like.

The display 170 is configured to display an image, a video, and the like. The display 170 includes a display panel.

In some embodiments of this application, the display 170 may be configured to display a line, a pattern, a written text, and the like that are drawn by a user by using the stylus. In some other embodiments of this application, the display 170 may be further configured to receive a signal sent from an electrode of the stylus.

For example, FIG. 4 is a diagram of a structure of the stylus 202 according to an embodiment of this application.

As shown in FIG. 4, the stylus 202 may include an electrode 410, a sensor 420, a communication module 430, and the like. The electrode 410 may be configured to transmit a signal to the display 170 shown in FIG. 3. Correspondingly, the electronic device 201 may determine a hover coordinate of the stylus 202 on the display 170 based on the signal received by the display 170. In some embodiments, the electrode 410 may be integrated at a tip position of the stylus 202. Certainly, in another embodiment, the electrode 410 may alternatively be integrated at another position on the stylus 202, for example, a cap position. This is not specifically limited in this embodiment of this application.

In some embodiments, the sensor 420 may be configured to detect a user operation performed on the stylus 202, for example, including but not limited to one or more of a tap operation, a flick operation, a touch operation, and a pinch operation. When the user operation is implemented as a tap operation, a flick operation, or a pinch operation, the sensor 420 may be specifically implemented as a film sensor or an acceleration sensor. For example, the film sensor may identify a tap operation by identifying a touch event and a pinch operation by detecting pressure data. The acceleration sensor may be configured to detect a magnitude of an acceleration of the stylus 202 in each direction (generally three axes). For example, the acceleration sensor may identify a flick operation by detecting acceleration data. When the user operation is a touch operation, the sensor 420 may be specifically implemented as a touch sensor, a pressure sensor, or the like.

In some embodiments, the sensor 420 may be further configured to magnetically attach the stylus 202 to a fixed position on the electronic device. In this embodiment, the sensor 420 may further be specifically implemented as a magnetic sensor.

It may be understood that the sensor 420 may include one or more sensors. This is not limited in this embodiment of this application. In addition, an installation position of the sensor in the stylus 202 is not specifically limited in this embodiment of this application.

The communication module 430 may be configured to implement information exchange between the stylus 202 and another device (for example, the electronic device 201). For detailed descriptions of the communication module 430, refer to related descriptions of the communication module shown in FIG. 3.

Optionally, in another embodiment, the electronic device and/or the stylus may include more or fewer components than those shown in FIG. 3 and FIG. 4, or some components are combined, or some components are split, or some components are replaced, or component arrangements are different. The components shown in the figures may be implemented through hardware, software, or a combination of software and hardware.

In some embodiments, a software system of the electronic device may use a layered architecture, an event-driven architecture, a microkernel architecture, a micro service architecture, or a cloud architecture. In embodiments of this application, the layered architecture is used as an example to describe a software structure of the electronic device 201.

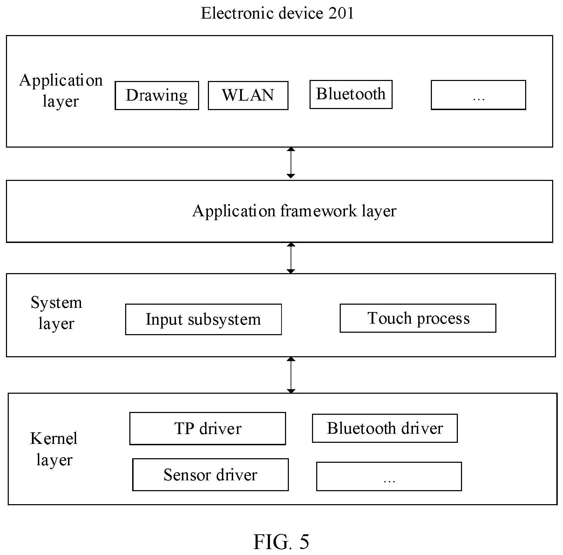

FIG. 5 is a diagram of the software structure of the electronic device 201 according to an embodiment of this application.

In the layered architecture, software is divided into several layers, and each layer has a clear role and task. The layers communicate with each other through software interfaces. In some embodiments, the software system of the electronic device may include four layers: an application layer, an application framework layer, a system layer, and a kernel layer.

The application layer may include a series of application packages, for example, including but not limited to applications such as drawing, Bluetooth, and WLAN. In some embodiments of this application, the drawing application may be used to implement various drawing operations.

The application framework layer may provide an application programming interface (application programming interface, API) and a programming framework for the applications at the application layer. The application framework layer may include some predefined functions.

The system layer may be configured to provide various system services. In some embodiments, the system layer may include an input (input) subsystem and a touch process (Aptouch Daemon). The input subsystem is a subsystem configured to manage an input. The input subsystem may be configured to manage an input transaction. A driver of an input device may be registered with a kernel through an interface provided by the input subsystem, and interact with user space by using a function provided by the input subsystem. For example, in some embodiments of this application, the input subsystem may be configured to manage a tap event, a flick event, and the like of the stylus.

APtouch Daemon is a process related to a touch on the display. The process may run in a background of the electronic device 201, to provide a continuously running service and function.

The kernel layer is a layer between hardware and software. In some embodiments, the kernel layer may include one or more of a touchscreen (touch pad, TP) driver, a Bluetooth driver, and a sensor driver.

It may be understood that the software structure of the electronic device 201 shown in FIG. 5 is merely an example for description. In actual application, the electronic device 201 may further include more or fewer layers and/or more or fewer modules, and the modules may alternatively belong to different layers. For example, the input subsystem at the system layer may alternatively belong to the application framework layer. This is not limited in this embodiment of this application.

With reference to a scenario in which the stylus draws on the electronic device, the following describes a workflow of software and hardware of the electronic device by using an example.

In some scenarios, the stylus may hover over the display of the electronic device. When the stylus receives a tap operation, the electrode of the stylus transmits a signal to the display. Correspondingly, after receiving the signal, the display obtains a hover coordinate of the stylus on the display based on the signal, and may obtain a tap event of the stylus. Then the TP driver at the kernel layer is started, and data is reported to APtouch Daemon by using the TP driver. Then APtouch Daemon packages data such as the hover coordinate of the stylus and sends packaged data back to the TP driver. Further, after receiving the packaged data, the TP driver transmits the packaged data to the drawing application at the application layer by using the input subsystem and the framework layer. Finally, the drawing application performs a process of drawing an ink trace based on the packaged data, and finally presents the drawn ink trace on the display of the electronic device.

All technical solutions in the following embodiments may be implemented in a device having the structure shown in FIG. 3, FIG. 4, or FIG. 5, and a system having the architecture shown in FIG. 2.

It may be understood that in descriptions of the following embodiments, the electronic device 201 is an electronic device, and the stylus 202 is a stylus. The electronic device and/or the stylus may perform some or all of steps in embodiments of this application. These steps or operations are merely examples. Alternatively, other operations or variations of various operations may be performed in embodiments of this application. In addition, the steps may be performed in a sequence different from a sequence presented in embodiments of this application, and not all the operations in embodiments of this application may be performed.

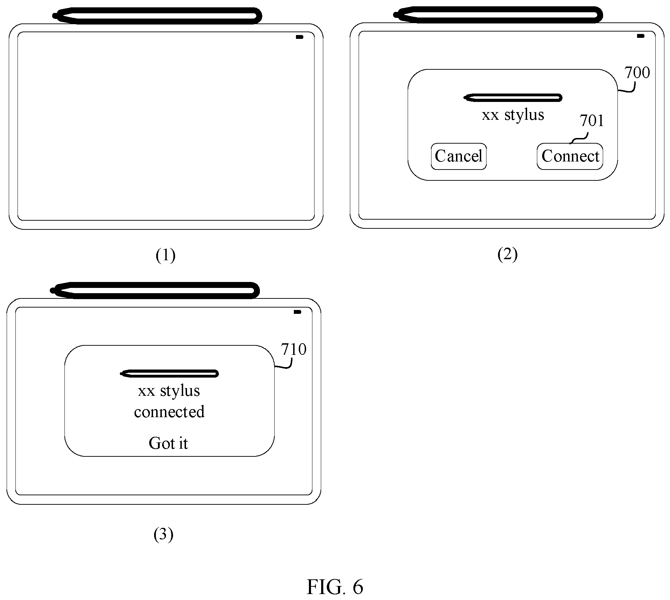

In some scenarios, before the stylus is used to draw on the electronic device, a connection needs to be established between the stylus and the electronic device first. For example, FIG. 6 is a diagram of a scenario in which the stylus establishes a connection to the electronic device according to an embodiment of this application. As shown in (1) in FIG. 6, the user may attach the stylus to a side frame (for example, a specified position on a long side frame) of the electronic device, and a process of connecting the stylus to the electronic device may be triggered in response to the attach operation. Optionally, before receiving the stylus attach operation, the electronic device may present various interfaces, including but not limited to a home screen, a lock screen interface, running interfaces of various applications, and the like. In other words, regardless of an interface presented on the electronic device, when the stylus is attached to the specified position on the electronic device, the process of connecting the stylus to the electronic device may be triggered. This is not limited in this embodiment of this application.

Then, as shown in (2) in FIG. 6, the electronic device may display a connection interface 700, and the connection interface 700 may be used to prompt the user to determine whether to establish a connection between the stylus and the electronic device. For example, the electronic device detects a tap operation such as a tap operation performed by the user on a connect control 701, and the stylus establishes a connection to the electronic device in response to the operation. Optionally, the electronic device may further present a prompt interface 710 shown in (3) in FIG. 6, to prompt the user that the current connection between the stylus and the electronic device is successfully established.

It may be understood that the foregoing merely describes an implementation of establishing a connection between the electronic device and the stylus by using an example. In another embodiment, the electronic device may alternatively establish a connection to the stylus in other manners, for example, various manners such as tap-to-pair and Bluetooth pairing. This is not specifically limited in this embodiment of this application.

Further, after the electronic device establishes the connection to the stylus, the user may perform various drawing operations on the electronic device by using the stylus. With reference to the accompanying drawings, the following describes a process in which the user draws on the electronic device by using the stylus.

In some embodiments, a drawing application may be installed on the electronic device, and the user may perform a drawing operation on a running interface of the drawing application by using the stylus. In this case, the drawing application on the electronic device may draw a corresponding ink trace in response to the drawing operation performed by the user, to generate a picture.

Optionally, the drawing application may be an application dedicated to drawing, or may be another application that can implement a drawing function, for example, including but not limited to various applications such as memo, note, and text applications. Optionally, the drawing application may be a system application, or may be a downloaded third-party application. This is not limited in this embodiment of this application.

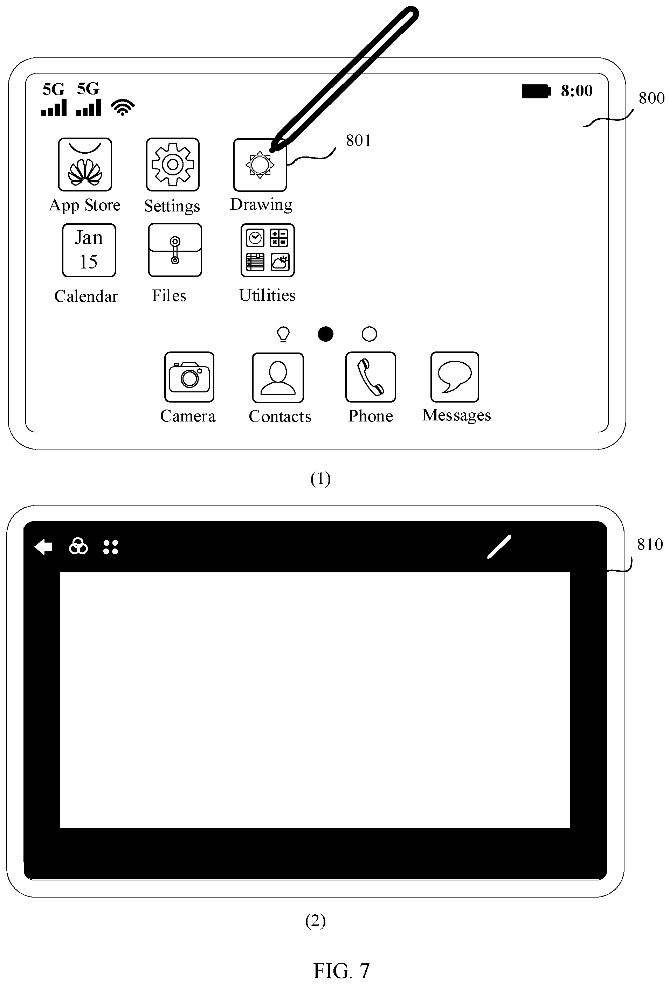

For example, as shown in (1) in FIG. 7, the electronic device displays a home screen 800 (or referred to as a desktop 800), and the home screen 800 includes one or more application icons, such as a calendar application icon and a settings application icon, which are not individually illustrated herein. Icons of different applications may be used to open running interfaces of the corresponding applications, to implement functions of the corresponding applications. The one or more application icons include an icon 801 of the drawing application.

For example, the electronic device detects a tap operation performed by the user on the icon 801 of the drawing application. Optionally, the tap operation may be implemented by a finger of the user, or may be implemented by the stylus. In response to the operation, as shown in (2) in FIG. 7, the electronic device may display a running interface 810 of the drawing application, and the user may perform various drawing operations on the running interface 810 by using the stylus. Optionally, in response to the tap operation performed by the user on the icon 801 of the drawing application, the electronic device may further first present a layer creation interface (not shown in the figure) before presenting the running interface 810, so that various drawing operations are performed on the layer created by the user. This is not limited in this embodiment of this application.

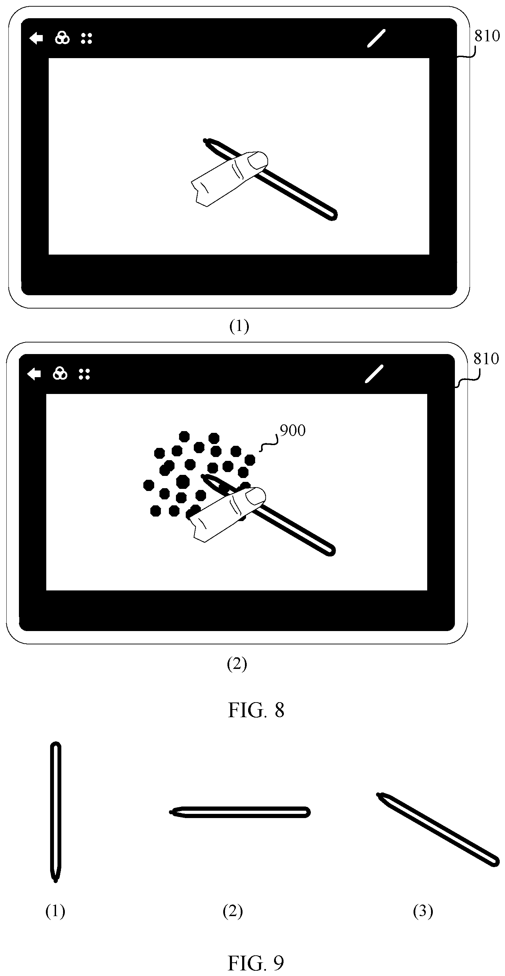

In some embodiments, the user may draw on the running interface 810 by tapping the stylus. As shown in (1) in FIG. 8, the user performs a tap operation on the stylus. Optionally, the user may hold the stylus with one hand, and tap the stylus with the other hand. Alternatively, the user may hold the stylus and tap the stylus with the same hand. A tapping manner used by the user is not limited in this embodiment of this application. In response to the operation, the stylus may identify a tap event, and then send the tap event to the electronic device. Correspondingly, when identifying the tap event, the electronic device presents an ink trace in a preset area based on the tap event, for example, an ink trace 900 shown in (2) in FIG. 8. Optionally, in this embodiment, the ink trace 900 may be an ink patch (for example, including but not limited to a circle, a sector, a rectangle, or an irregular polygon). It may be understood that in this embodiment, an example in which the stylus identifies the tap event is used. In another embodiment, the electronic device may also identify the tap event. This is not limited in this embodiment of this application. In this way, the user may draw the ink trace on the electronic device by tapping the stylus, so that interaction modes between the stylus and the electronic device are enriched. This interaction mode can simulate drawing techniques in some specific drawing scenarios, to improve user experience.

It may be understood that the ink trace in this embodiment of this application may be a drawing trajectory or a stroke trace presented by the electronic device based on a series of operations after the stylus performs the series of operations. The term "ink trace" is used in this specification for description.

It may be understood that the tap operation may be a single tap, or may be a plurality of taps. A quantity of taps included in the tap operation is not specifically limited in this embodiment of this application. Optionally, when the stylus receives the tap operation performed by the user, the stylus may be in a vertical usage state shown in (1) in FIG. 9, or may be in a horizontal usage state shown in (2) in FIG. 9, or may be in an inclined usage state shown in (3) in FIG. 9. The usage state of the stylus in this case is not limited in this embodiment of this application.

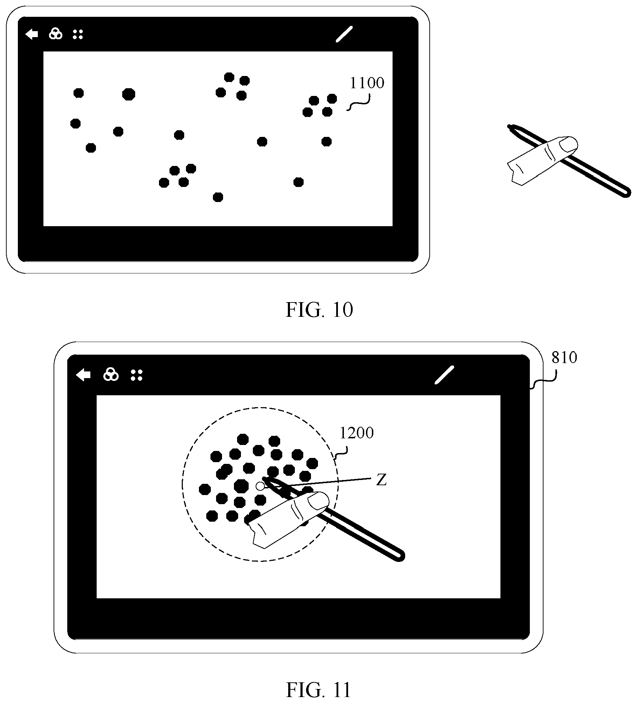

In some embodiments, when the stylus receives a tap operation, the stylus may not hover over the display of the electronic device. In this embodiment, in a possible implementation, the preset area may be an entire display area of the display of the electronic device. For example, in this implementation, the ink trace presented in the preset area may be an ink trace 1100 shown in FIG. 10. Certainly, in another implementation, the preset area may alternatively be a display area (for example, an upper left area or an upper right display area) on the display of the electronic device. This is not limited in this embodiment of this application.

In some other embodiments, when the stylus receives a tap operation, the stylus may hover over the display of the electronic device. In this embodiment, in a possible implementation, when the electronic device cannot identify (or obtain) the hover coordinate of the stylus on the display, for example, when the electrode of the stylus is not located above the display of the electronic device, or when a distance at which the stylus hovers over the display of the electronic device exceeds a preset distance, the display of the electronic device may not receive a signal transmitted from the electrode of the stylus, and cannot identify the hover coordinate of the stylus above the display of the electronic device. In this case, the preset area may also be an entire display area of the display of the electronic device, or the preset area may be a display area on the display of the electronic device.

In this embodiment, in another possible implementation, when the electronic device can identify the hover coordinate of the stylus on the display, for example, when the electrode of the stylus is located above the display of the electronic device, and when a distance at which the stylus hovers over the display of the electronic device is within a preset distance, the display of the electronic device may receive a signal transmitted from the electrode of the stylus, and may further identify the hover coordinate of the stylus above the display of the electronic device. In this case, the preset area may be determined based on the hover coordinate of the stylus. In other words, the preset area is related to the hover coordinate of the stylus on the display of the electronic device.

In this implementation, in a specific embodiment, the preset area may be a display area of a preset size based on the hover coordinate of the stylus on the display of the electronic device. Optionally, the hover coordinate may be used as a center point, a corner point, an edge point, or the like of the preset area. The preset area may be a circle, a rectangle, a sector, or an area in another shape, for example, a circle with the hover coordinate as a center. A size, a shape, or the like of the preset area is not limited in this embodiment of this application. For example, as shown in FIG. 11, assuming that the hover coordinate of the stylus is Z, the preset area may be a display area corresponding to a circle 1200.

It may be understood that, in this embodiment of this application, presenting the ink trace in the preset area does not mean that the ink trace needs to fill the preset area. The ink trace may occupy a part of the preset area or the entire preset area for presentation. Optionally, positions of ink droplets included in the ink trace presented in the preset area may be random, and positions of ink droplets presented at different occasions may be the same or may be different.

In some embodiments, a style (or referred to as a parameter of the ink trace, including but not limited to one or more of an ink trace color, an ink droplet size, and an ink droplet intensity) of the ink trace presented in the preset area may be determined based on a style of a brush selected by the user. In other words, the style of the ink trace presented in the preset area is related to the style of the brush selected by the user. Optionally, brushes may be classified based on different classification granularities. For example, brushes may be classified into round-tip brushes, square-tip brushes, and the like based on brush tip shapes. Brushes may be classified into scenario brushes, texture brushes, and pattern brushes based on application scenarios. Classification of brushes is not limited in this embodiment of this application. It may be understood that different brushes may have different styles.

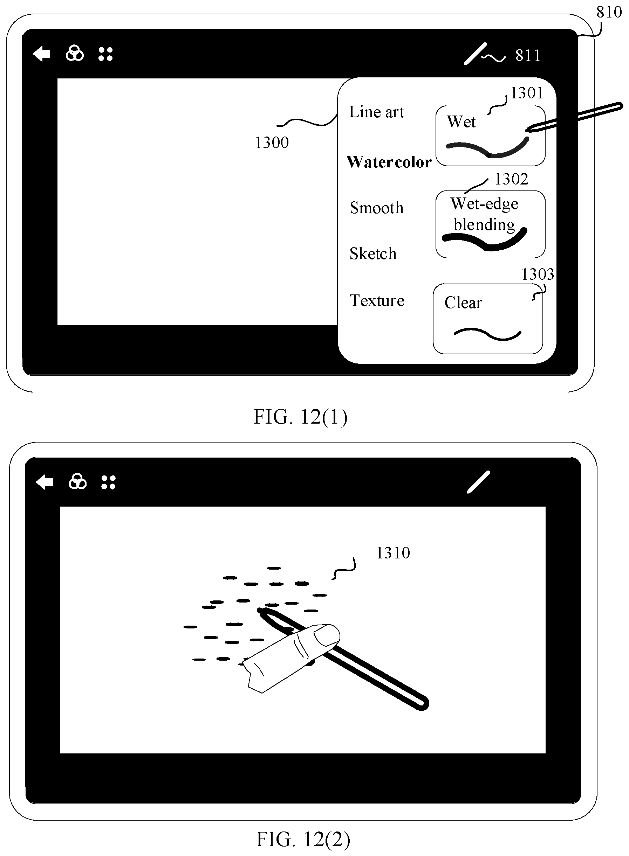

For example, as shown in FIG. 12(1), the electronic device may display a brush selection interface 1300 of the drawing application. Optionally, the user may perform a tap operation or the like on a control 811 included on the running interface 810, and the electronic device presents the brush selection interface 1300 in response to the operation. Certainly, the user may alternatively open the brush selection interface 1300 in another manner. This is not limited in this embodiment of this application.

The brush selection interface 1300 may include one or more brush categories, including but not limited to line art, watercolor, flat fill, sketch, texture, and the like, which are not individually described herein. Each brush category may include one or more brushes of different styles. The watercolor brush category is used as an example. The watercolor brush category may include a wet brush 1301, a wet-edge blending brush 1302, a clear brush 1303, and the like, which are not individually described herein. Based on an actual requirement, the user may select a brush from the brush category for drawing.

For example, the brush selected by the user is wet. With reference to the foregoing description, after the stylus receives the tap operation of the user, the electronic device presents, with reference to the brush selected by the user, an ink trace in the preset area in response to the operation, where the ink trace may be an ink trace 1310 shown in FIG. 12(2), and a style of the ink trace 1310 is the same as a style of the wet brush.

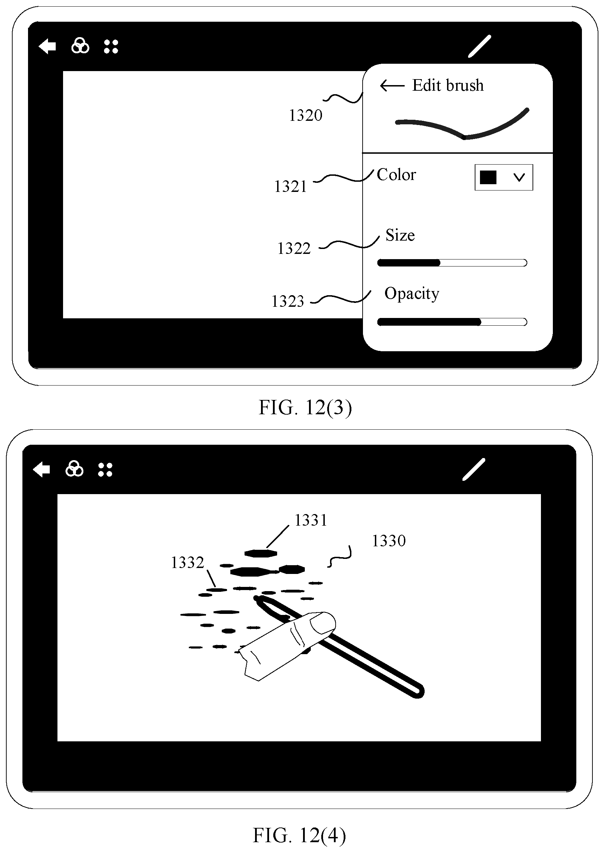

In some embodiments, the style of the brush is further related to one or more parameters of the brush. For example, the parameter of the brush may include but is not limited to one or more of a color, a size (or referred to as a dimension), transparency, and the like. In some implementations, the parameter of the brush may be set by default or fixed. In some other implementations, the user may further choose to change the setting of the parameter of the brush, to change the style of the brush, and further change the style of the ink trace presented in the preset area. For example, the wet brush is still used as an example. The user may change the setting of the parameter of the wet brush. As shown in FIG. 12(1), the user may perform a tap operation or the like on the wet brush 1301. In response to the operation, as shown in FIG. 12(3), the electronic device may present a parameter setting interface 1320. The parameter setting interface 1320 includes one or more parameter setting options of the wet brush, for example, a color option 1321, a size option 1322, and an opacity option 1323. The user may set a corresponding parameter by using each parameter setting option. It may be understood that different parameters of the brush may be set by using a same interface, or may be set by using different interfaces. This is not limited in this embodiment of this application.

In this way, by changing the parameter of the brush, the user may set the parameter required by the user, so that an effect of the ink trace can better meet an actual requirement and can meet a user requirement, for example, requirements in different drawing scenarios. For example, the user sets the color of the wet brush to black, and set the size and transparency to change randomly. After the setting is completed, if the stylus detects that the user performs a tap operation, the stylus may identify a tap event in response to the operation, and then send the tap event to the electronic device. Correspondingly, after identifying the tap event, the electronic device starts the drawing application. An ink trace presented by the drawing application based on the brush selected by the user and the parameter setting of the brush may be an ink trace 1330 shown in FIG. 12(4). Optionally, in this example, because the user sets the size and transparency of the brush to change randomly, for the ink trace 1330 shown in FIG. 12(4), a size and transparency of each ink droplet included in the ink trace 1330 also change randomly. In other words, for the ink trace 1330 shown in FIG. 12(4), sizes and/or transparency of all included ink droplets may be the same or may be different. For example, a size and transparency of an ink droplet 1331 are respectively different from a size and transparency of an ink droplet 1332.

It may be understood that the ink trace in this embodiment of this application may include one or more ink droplets (or referred to as ink dots).

Certainly, in another example, if the user sets the size, transparency, and the like of the brush to be fixed, for the ink trace presented in FIG. 12(4), the size, transparency, and the like of each ink droplet included in the ink trace are also fixed. In other words, sizes, transparency, and the like of different ink droplets are respectively the same.

In some other embodiments, a style of the ink trace presented in the preset area may be determined by one or more parameters of the ink trace. In other words, the style of the ink trace presented in the preset area may be related to one or more parameters of the ink trace. For example, the parameter of the ink trace may include but is not limited to one or more of an ink droplet size, an ink droplet density, an ink droplet intensity (or referred to as opacity, color depth, transparency, or the like), a range, and the like. In this embodiment, in a possible implementation, the parameter of the ink trace presented in the preset area may also be default or fixed. In another possible implementation, similar to the foregoing manner of setting a brush parameter, the user may also set and/or change the setting of one or more parameters of the ink trace by using the running interface of the drawing application or the like. Certainly, the user may alternatively set and/or change one or more parameters of the ink droplet in another manner. This is not limited in this embodiment of this application.

In still another possible implementation, one or more parameters of the ink trace may be further determined based on a tap force of a tap operation. In other words, one or more parameters of the ink trace are related to the tap force of the tap operation. In this way, the user may tap the stylus with different forces, making interaction modes between the user and the stylus more diversified, and also enriching a presentation effect of the ink trace. In a specific embodiment, when the user performs a tap operation on the stylus, the stylus may detect a tap force of the tap operation. For example, the stylus may detect the tap force by using an installed sensor. For example, using an acceleration sensor as an example, the stylus may detect the tap force based on an acceleration of the stylus sensed by the acceleration sensor. A manner of detecting the tap force by the stylus is not specifically limited in this embodiment of this application. Then the stylus may further send the detected tap force to the electronic device, so that the electronic device may determine the parameter of the ink trace based on the tap force.

It may be understood that, in this embodiment of this application, the tap force may be directly represented by sensing data (for example, an acceleration of the sensor) of the sensor, or may be represented by other data obtained through calculation based on sensing data of the sensor. This is not limited in this embodiment of this application.

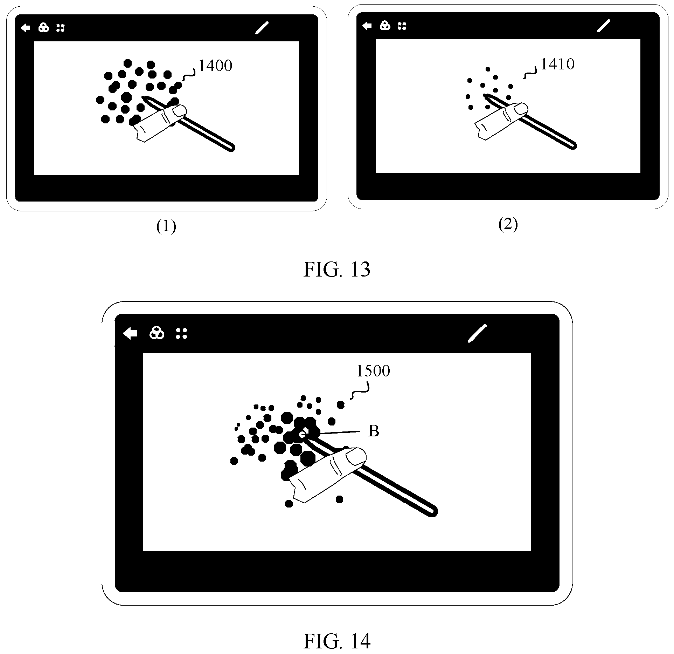

In a specific embodiment, one or more parameters of the ink trace are positively correlated with the tap force. For example, a greater tap force indicates a larger ink droplet size, and/or a higher ink droplet density, and/or a higher ink droplet intensity (that is, higher opacity, lower transparency, and a deeper color), and/or a larger range (that is, a larger display area occupied by the ink trace on the display). For example, as shown in FIG. 13, when the tap force on the stylus is A, the ink trace presented in the preset area may be an ink trace 1400 shown in (1) in FIG. 13. When the tap force on the stylus is B, and B is less than A, the ink trace presented in the preset area may be an ink trace 1410 shown in (2) in FIG. 13. It can be learned that, compared with the ink trace 1410, the ink trace 1400 has a larger ink droplet size, a higher ink droplet density, and a larger ink trace range. In this way, the parameter of the ink trace is set to be positively correlated with the tap force. This aligns with intuitive thinking of the user, so that the user can master the operation more easily.

Certainly, in another embodiment, one or more parameters of the ink trace may alternatively be negatively correlated with the tap force. For example, a greater tap force indicates a smaller ink droplet size, and/or a lower ink droplet density, and/or a lower ink droplet intensity (that is, lower opacity, higher transparency, and a lighter color), and/or a smaller range (that is, a smaller display area occupied by the ink trace on the display). Alternatively, one or more parameters of the ink trace and the tap force may meet a preset mapping relationship. For example, the mapping relationship may be as follows: When the tap force is a specific value or within a specific range, one or more parameters of the ink trace are set to the specific value or range. The mapping relationship is not specifically limited in this embodiment of this application, and a specific relationship between one or more parameters of the ink trace and the tap force is not specifically limited either.

In some other embodiments, a style (or a parameter) of the ink trace presented in the preset area may be further determined based on an orientation of a stylus tip, a hover coordinate of the stylus, or the like. In other words, the style of the ink trace presented in the preset area may be related to one or more of an orientation of the stylus, the hover coordinate of the stylus, and the like. In an actual splash-ink technique, a splash-ink trace is related to a splash direction and position and the like. The orientation of the stylus tip may simulate the splash direction, and the hover coordinate of the stylus may simulate the splash position. In this way, an effect of the ink trace can better match that of an ink trace in an actual splash-ink scenario. For example, when the user performs a tap operation on the stylus, the electrode of the stylus tip may transmit a signal to the display of the electronic device. Correspondingly, after receiving the signal based on the display, the electronic device may determine the orientation of the stylus tip (for example, various directions such as east, south, west, north, left, right, southeast, northeast, southwest, and northwest), and may further determine the hover coordinate of the stylus. Further, the style of the ink trace is determined based on one or more of the orientation of the stylus tip, the hover coordinate of the stylus, and the like. Optionally, in this embodiment, because the electrode of the stylus tip transmits the signal to the display of the electronic device, the hover coordinate of the stylus is a hover coordinate of the stylus tip.

It may be understood that the solutions to determining the parameters (or styles) of the ink trace in embodiments of this application may be used alone or in combination. For example, when the solutions are used alone, the parameters of the ink trace may be determined based on any one of the manners, and parameter types of the ink trace determined in different manners may be the same or may be different. When the solutions are used in combination, some parameters of the ink trace may be determined based on one of the manners, and then other parameters of the ink trace are determined based on another manner. This is not limited in this embodiment of this application.

In a specific embodiment, in a direction same as the orientation of the stylus tip, more ink traces are presented, for example, an ink trace range is larger, and/or an ink droplet density is higher, and/or an ink droplet intensity is higher; and/or an ink trace closer to the hover coordinate of the stylus is presented with a higher ink droplet density, and/or a larger ink droplet size, and/or a higher ink droplet intensity, and/or the like, that is, an ink trace farther away from the hover coordinate of the stylus is presented with a lower ink droplet density, and/or a smaller ink droplet size, and/or a lower ink droplet intensity, and/or the like; and/or the ink trace further diffuses in one or more other directions along the orientation of the stylus tip. In this way, the presented ink trace can align with a principle of ink trace presentation in a realistic splash-ink technique, so that a simulation effect is better. Optionally, because the ink trace is presented in the preset area, in this embodiment, the position of the preset area may also be related to the orientation of the stylus tip, or the position of the preset area may be determined based on the orientation of the stylus tip. In this embodiment, the ink trace presented in the preset area may be an ink trace 1500 shown in FIG. 14. As shown in FIG. 14, if the stylus tip faces toward the left side, the ink trace on the left side is presented with a higher ink droplet density and a larger ink trace range. At a position close to a hover coordinate B of the stylus (shown by using a point B as the hover coordinate B in the figure), the ink droplet size is larger, and the ink droplet density is higher.

In some embodiments, the tap operation may be a tap action performed on any position of the stylus, that is, regardless of which position of the stylus is tapped by the user, the tap action is considered as a same tap operation. In some other embodiments, tap actions performed on different positions of the stylus, for example, a tap action performed on a stylus body, a tap action performed on the stylus tip, and a tap action performed on a rear end of the stylus, may be considered as different tap operations. In this embodiment, the style of the ink trace, the preset area (or implemented as a position at which the ink trace is presented), and the like may be further determined based on different tap actions. For example, for different tap operations, the determined preset area and the determined style of the ink trace may be different.

The process of drawing an ink trace by performing a tap operation on the stylus is described above. In some other embodiments, the user may further perform a flick operation on the stylus to draw an ink trace. The following describes the process.

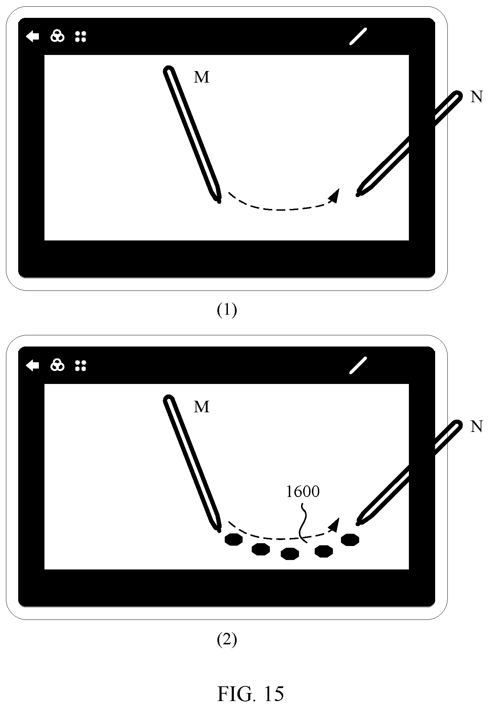

In some embodiments, as shown in (1) in FIG. 15, the user may perform a flick operation on the stylus, the stylus changes from a state M to a state N in response to the flick operation, and the stylus may identify a flick event (for example, the stylus may identify the flick event by using various sensors) and then send the flick event to the electronic device. Correspondingly, when identifying the flick event, the electronic device presents an ink trace based on the flick event, for example, an ink trace 1600 shown in (2) in FIG. 15. Optionally, the ink trace presented in this embodiment may be an ink streak. In this way, the user may draw the ink trace on the electronic device by flicking the stylus, so that interaction modes between the stylus and the electronic device are enriched. In addition, this interaction mode is similar to a splash-ink technique, and can simulate drawing techniques in some specific scenarios, thereby improving user experience.

Certainly, in another embodiment, the electronic device may also identify a flick event. For example, when the user flicks the stylus, during flicking, the electrode of the stylus transmits a signal to the display of the electronic device in real time or periodically. Correspondingly, after receiving the signal by using the display, the electronic device may identify a plurality of hover coordinates of the stylus, and may further identify a flick event with reference to the hover coordinates. Certainly, the electronic device may alternatively identify the flick event in another manner. This is not specifically limited in this embodiment of this application.

In some embodiments, when the stylus receives a flick operation, the stylus may not be flicked above the display of the electronic device. Optionally, in this embodiment, the ink trace may be presented in any display area or a default display area on the display of the electronic device.

In some other embodiments, when the stylus receives a flick operation, the stylus may be flicked above the display of the electronic device. Optionally, in this embodiment, in a possible implementation, when the electronic device cannot obtain a hover coordinate (that is, one or more hover coordinates included in the flick event) of the stylus during flicking of the stylus above the display, if a distance between the stylus and the display exceeds a specific distance when the stylus is flicked above the display of the electronic device, the electronic device may not obtain the hover coordinate of the stylus during flicking of the stylus. Optionally, in this implementation, the ink trace may also be presented in any display area or a default display area on the display of the electronic device.

In another possible implementation, when the electronic device can obtain a hover coordinate during flicking of the stylus above the display, if a distance between the stylus and the display does not exceed a specific distance when the stylus is flicked above the display of the electronic device, the electronic device may obtain the hover coordinate during flicking of the stylus. Optionally, in this implementation, the display area in which the ink trace is presented may be determined based on one or more hover coordinates (that is, one or more hover coordinates included in the flick event) included during flicking of the stylus. In other words, the display area in which the ink trace is presented is related to one or more hover coordinates included during flicking of the stylus.

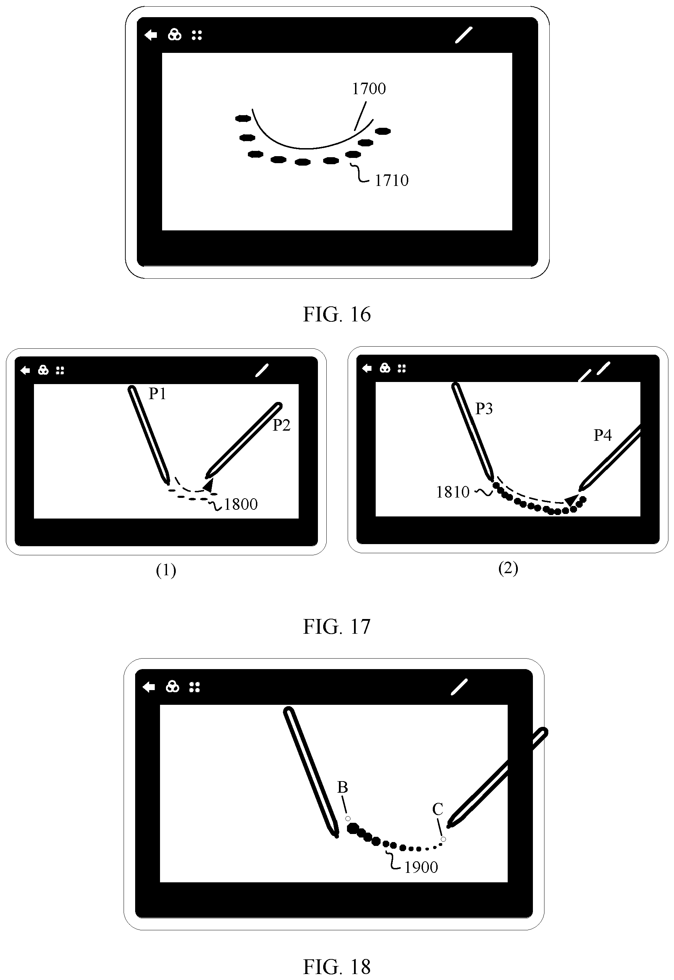

In this implementation, in a specific embodiment, the ink trace may be related to or corresponding to a trajectory of the stylus flicked above the display, for example, the same as the trajectory of the stylus. Optionally, the trajectory of the stylus flicked above the display may be determined based on a trajectory formed by one or more hover coordinates included during flicking of the stylus. For example, the trajectory of the stylus flicked above the display may be a trajectory formed by one or more hover coordinates included during flicking of the stylus. For example, as shown in FIG. 16, a trajectory such as a trajectory 1700, formed by one or more hover coordinates included during flicking of the stylus, is used as an example. In this case, the ink trace presented by the electronic device may be an ink trace 1710.

In some embodiments, similar to the foregoing tap operation solution, a style of the ink trace may also be determined based on a style of a brush selected by the user. For the specific implementation, refer to the foregoing related implementation.

In some embodiments, the style of the ink trace may alternatively be determined based on one or more parameters of the ink trace. In other words, the style of the ink trace may also be related to one or more parameters of the ink trace. For example, the style of the ink trace may include but is not limited to one or more of an ink droplet size, an ink droplet density, an ink droplet intensity, an ink trace length, an ink trace direction, and the like. In this embodiment, in a possible implementation, the parameter of the ink trace may also be default or fixed. In another possible implementation, similar to the foregoing manner of setting a brush parameter, the user may also change the setting of one or more parameters of the ink trace by using the running interface of the drawing application.

In some embodiments, one or more parameters of the ink trace may be further determined based on one or more of a flick direction, amplitude, speed, acceleration, and the like of the stylus. The flick speed or acceleration may also be described as a flick force. In other words, the style of the ink trace is related to one or more of the flick direction, amplitude, speed, acceleration, and the like of the stylus. In this way, the user may flick the stylus in different directions, and/or with different flick forces, and/or with different flick amplitudes, so that interaction modes between the user and the stylus are enriched. In addition, an effect of the presented ink trace may be further enriched, and better match an effect of an ink trace in a realistic splash-ink technique, that is, a simulation effect is better. Optionally, the flick amplitude of the stylus may be determined based on a flick distance of the stylus, and the flick distance of the stylus may be determined based on hover coordinates included during flicking of the stylus, for example, determined based on a difference between a start hover coordinate and an end hover coordinate. The flick speed of the stylus may be determined based on the flick distance and duration of the stylus. The flick acceleration of the stylus may be detected by a sensor (such as an acceleration sensor) of the stylus. It may be understood that the flick amplitude, speed, and the like of the stylus may be determined by the stylus, or may be determined by the electronic device. This is not limited in this embodiment of this application.

In a specific embodiment, one or more parameters (for example, an ink trace direction, an ink droplet size, an ink droplet density, and an ink trace length (or referred to as a length)) of the ink trace may be positively correlated with one or more of the flick amplitude, speed, acceleration, and the like of the stylus, and the direction of the ink trace is consistent with the flick direction of the stylus. For example, an increase of one or more of the flick amplitude, speed, acceleration, and the like of the stylus indicates a larger ink droplet size, and/or a higher ink droplet density, and/or a higher ink droplet intensity, and/or a greater ink trace length, and the like. For example, as shown in (1) in FIG. 17, when the stylus receives a flick operation and changes from a state P1 to a state P2 based on the flick operation, a presented ink trace is shown by an ink trace 1800. As shown in (2) in FIG. 17, when the stylus receives a flick operation and changes from a state P3 to a state P4, a presented ink trace is shown by an ink trace 1810. A flick amplitude of the flick operation received by the stylus in (1) in FIG. 17 is less than a flick amplitude of the flick operation received by the stylus in (2) in FIG. 17. It can be learned that, compared with the ink trace 1800, the ink trace 1810 has a larger ink droplet size, a higher ink droplet density, a greater ink trace length, and the like.

Certainly, in another embodiment, one or more parameters of the ink trace may be negatively correlated with one or more of the flick amplitude, speed, acceleration, and the like of the stylus, or a mapping relationship or the like may exist. The ink trace length is used as an example. A fixed proportional relationship may also exist between the ink trace length and the flick amplitude of the stylus. For this implementation, refer to the foregoing related implementation.

In some other embodiments, one or more parameters of the ink trace may be further determined based on hover coordinates during flicking of the stylus. In other words, one or more parameters of the ink trace may also be related to the hover coordinates during flicking of the stylus.

In a specific embodiment, the hover coordinates during flicking of the stylus include a start hover coordinate and an end hover coordinate. The start hover coordinate may refer to a corresponding hover coordinate when the stylus starts to flick, and the end hover coordinate may refer to a corresponding hover coordinate when the stylus stops flicking. An ink trace closer to the start hover coordinate is presented with a higher ink droplet density, and/or a larger ink droplet size, and/or a higher ink droplet intensity, and/or the like; and an ink trace closer to the end hover coordinate is presented with a lower ink droplet density, and/or a smaller ink droplet size, and/or a lower ink droplet intensity, and/or the like. For example, as shown in FIG. 18, an example in which the start hover coordinate during flicking of the stylus is a point B and the end hover coordinate is a point C is used. In this case, the presented ink trace may be shown by an ink trace 1900. It can be learned that at a position closer to the point B, the ink droplet density is higher, and the ink droplet size is larger. At a position closer to the point C, the ink droplet density is lower, and the ink droplet size is smaller. In this way, an ink trace closer to the start hover coordinate is presented with a higher ink droplet density, and/or a larger ink droplet size, and/or a higher ink droplet intensity. In this way, an effect of the ink trace can be closer to an effect of flicking a brush in a realistic splash-ink scenario, and a simulation effect is better.

Certainly, in another embodiment, alternatively, an ink trace closer to the end hover coordinate may be presented with a higher ink droplet density, and/or a larger ink droplet size, and/or a higher ink droplet intensity, and/or the like; and an ink trace closer to the start hover coordinate is presented with a lower ink droplet density, and/or a smaller ink droplet size, and/or a lower ink droplet intensity, and/or the like.

The process of drawing an ink trace by performing a tap operation or a flick operation on the stylus is described above. In some other embodiments, the user may further perform a pinch operation (which may also be referred to as a pinch operation) on the stylus to draw an ink trace. The following describes the process.

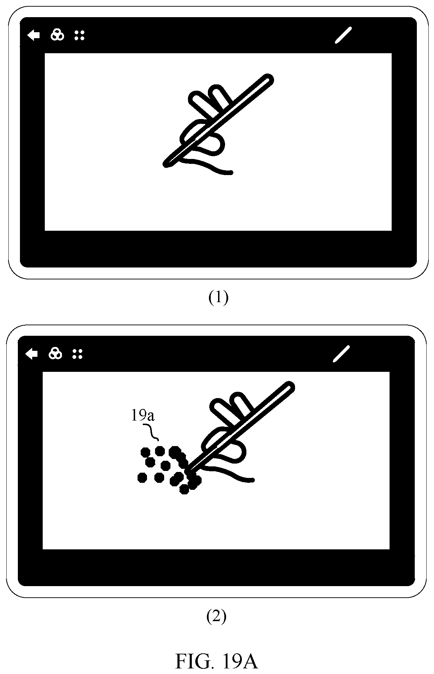

In some embodiments, as shown in (1) in FIG. 19A, the user performs a pinch operation on the stylus. Optionally, the pinch operation may be a single pinch, or may be a plurality of pinches. A quantity of pinches included in the pinch operation is not specifically limited in this embodiment of this application. For example, the user may implement a pinch operation on the stylus by pinching the stylus body with a plurality of fingers. In response to the operation, the stylus may identify a pinch event, and then send the pinch event to the electronic device. Similarly, the stylus may also identify the pinch event by using various sensors (such as a film sensor). Correspondingly, when identifying the pinch event, the electronic device presents an ink trace in a preset area based on the pinch event, for example, an ink trace 19a shown in (2) in FIG. 19A. Optionally, the ink trace presented in this embodiment may be an ink patch or may be an ink streak. For the description of the preset area and the implementation of the preset area when the electronic device cannot identify the hover coordinate of the stylus on the display, refer to the related implementation of the foregoing tap operation.

In this way, the user may draw an ink trace on the electronic device by pinching the stylus, so that interaction modes between the stylus and the electronic device can be enriched. In addition, the pinch operation may simulate an interaction mode of a spray gun, thereby improving user experience.

In some embodiments, when the electronic device can obtain the hover coordinate of the stylus on the display, the display area in which the ink trace is presented, that is, the preset area, may alternatively be determined based on the hover coordinate of the stylus. In other words, the preset area in which the ink trace is presented is related to the hover coordinate of the stylus on the display of the electronic device. Similarly, in this embodiment, the preset area may also be a display area of a preset size based on the hover coordinate. For another implementation in this embodiment, refer to the corresponding implementation of the foregoing tap operation.

In some embodiments, similar to the foregoing tap operation solution, a style of the ink trace may also be determined based on a style of a brush selected by the user. For the specific implementation, refer to the foregoing related implementation.

In some embodiments, the style of the ink trace may alternatively be determined based on one or more parameters of the ink trace. For example, the parameter of the ink trace may include but is not limited to one or more of an ink droplet size, an ink droplet density, an ink droplet intensity, a range, and the like. Similarly, in this embodiment, in some implementations, the parameter of the ink trace may be default; or similar to the foregoing manner of setting a brush parameter, the user may also change the setting of one or more parameters of the ink trace by using the running interface of the drawing application.

In some other implementations, one or more parameters of the ink trace may be further determined based on a pinch force of the pinch operation. In this way, the user may pinch the stylus with different forces, making interaction modes between the user and the stylus more diversified, and also enriching a presentation effect of the ink trace. Similarly, the stylus may also detect the pinch force by using a sensor (such as a film sensor or a pressure sensor), and send the detected pinch force to the electronic device. A manner of detecting the pinch force is not limited in this embodiment of this application.

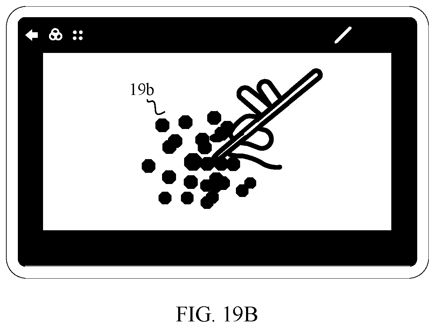

In a specific embodiment, one or more parameters of the ink trace may be positively correlated with the pinch force. For example, a greater pinch force indicates a larger ink droplet size, and/or a higher ink droplet density, and/or a higher ink droplet intensity, and/or a larger range. For example, when the pinch force on the stylus is a, the ink trace presented on the display may be shown by an ink trace 19a shown in (2) in FIG. 19A. When the pinch force on the stylus is b, b needs to be greater than a, and the ink trace presented on the display may be shown by an ink trace 19b shown in FIG. 19B. It can be learned that, compared with the ink trace 19a, the ink trace 19b has a larger ink droplet size, a higher ink droplet density, and a larger ink trace range.

Similarly, in another embodiment, one or more parameters of the ink trace may alternatively be negatively correlated with the pinch force. For example, a greater pinch force indicates a smaller ink dot size, and/or a lower ink droplet density, and/or a lower ink droplet intensity, and/or a smaller range. Alternatively, one or more parameters of the ink trace and the tap force may meet a preset mapping relationship similar to that in the foregoing tap operation scenario.

In some other implementations, similar to the implementation of the foregoing tap operation, the parameter of the ink trace may also be determined based on the orientation of the stylus tip, the hover coordinate of the stylus, and the like. For the specific implementation, refer to the foregoing related implementation. It may be understood that, a relationship between the orientation of the stylus tip, the hover coordinate of the stylus, and the parameter of the ink trace under the pinch operation may be the same as or different from a relationship between the orientation of the stylus tip, the hover coordinate of the stylus, and the parameter of the ink trace under the tap operation.

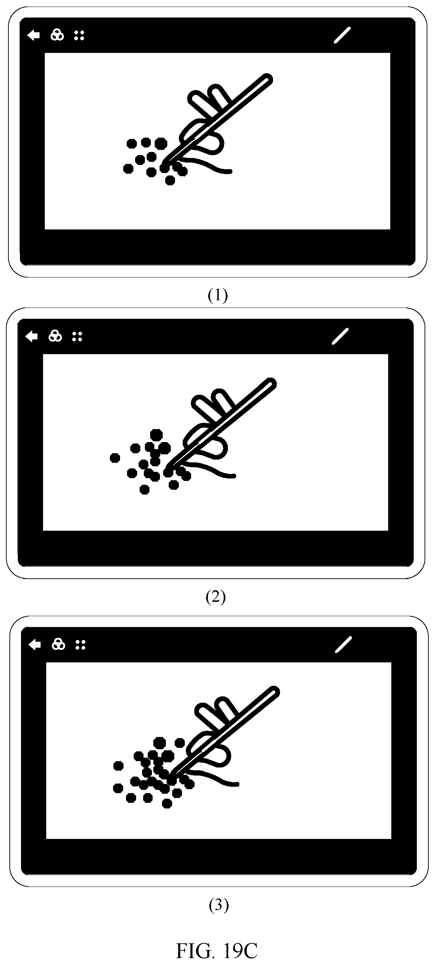

In some embodiments, when the user performs a pinch operation on the stylus, a hover position of the stylus over the display of the electronic device may not change. For example, the user fixedly hovers the stylus at a position over the display of the electronic device to perform one or more pinch operations. In this embodiment, when the stylus receives the pinch operation, the hover coordinate of the stylus obtained by the electronic device may be fixedly one coordinate. For each pinch operation, the electronic device may present a corresponding ink trace based on the foregoing solution. It may be understood that the force of each pinch operation may be the same or different. Optionally, positions of ink droplets included in an ink trace presented in each pinch operation may be random, that is, positions of ink droplets included in ink traces presented in different pinch operations may be different. For example, (1) to (3) in FIG. 19C are respectively diagrams of ink trace effects corresponding to one pinch operation, two pinch operations, and three pinch operations. Optionally, in this embodiment, the ink trace may be an ink patch.

Similarly, when the user fixedly hovers the stylus at a position over the display of the electronic device to perform one or more tap operations, positions of ink droplets included in the ink trace presented in each tap operation may also be random, that is, positions of ink droplets included in the ink traces presented in different tap operations may be different.

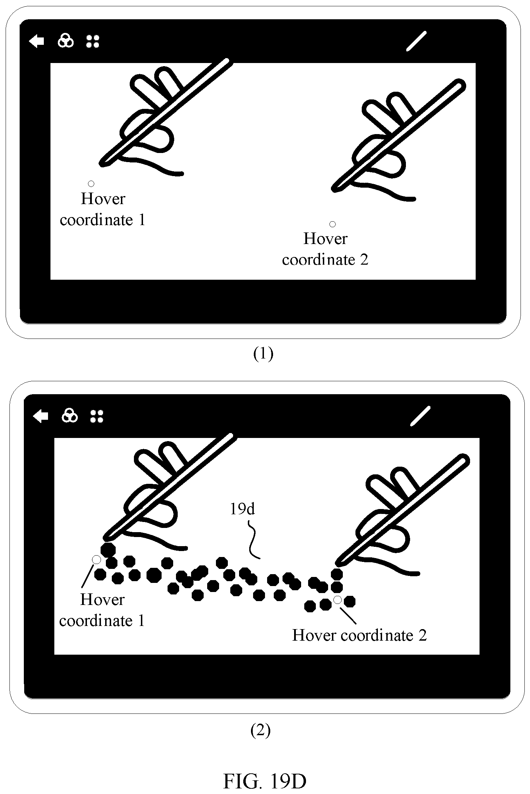

In some other embodiments, when the user performs a pinch operation on the stylus, a hover position of the stylus over the display of the electronic device may change. For example, while pinching the stylus, the user moves the pinched stylus on the display of the electronic device. In this embodiment, when the stylus receives the pinch operation, hover coordinates of the stylus obtained by the electronic device may be a plurality of coordinates. In this embodiment, the parameter of the ink trace may be presented based on the plurality of hover coordinates corresponding to the pinch operation. Optionally, in this embodiment, the ink trace may follow a trajectory formed by the plurality of hover coordinates. For example, as shown in (1) in FIG. 19D, when the user pinches the stylus and moves the pinched stylus from a hover position corresponding to a hover coordinate 1 to a hover position corresponding to a hover coordinate 2, an ink trace presented by the electronic device may be an ink trace 19d shown in (2) in FIG. 19D. Optionally, in this embodiment, the ink trace may be an ink streak. In this way, an interaction effect similar to ink dripping may be presented, so that the interaction effect is enriched.

In some embodiments, the pinch operation may also be performed on any position of the stylus, for example, the stylus tip, the stylus body, the rear end of the stylus, or different positions of the stylus body. A position of the stylus on which the pinch operation is performed is not specifically limited in this embodiment of this application. Regardless of which position of the stylus is pinched by the user, the pinch operation is considered as a same pinch operation. In some other embodiments, pinch operations performed on different positions of the stylus may be considered as different pinch operations. Similarly, in this embodiment, the style, the preset area, and the like of the ink trace may be further determined based on the pinch operation.

It may be understood that the tap operation, the flick operation, and the pinch operation are used as examples above, and may be replaced with a touch operation and the like in another embodiment. Optionally, when the tap operation, the flick operation, the pinch operation, or the like is received by the stylus hovering at a distance over the display of the electronic device, the stylus may not be in contact with the display of the electronic device, that is, contactless interaction is implemented while a distance is maintained between the stylus and the display of the electronic device, so that the interaction effect can be better.

In some embodiments, before the drawing application on the electronic device responds to the tap event, and/or the flick event, and/or the pinch event, a function of responding to the tap event, and/or the flick event, and/or the pinch event of the stylus needs to be enabled. After the function is enabled, the corresponding ink trace is drawn in response to the corresponding event only when the tap event, and/or the flick event, and/or the pinch event of the stylus are/is identified.

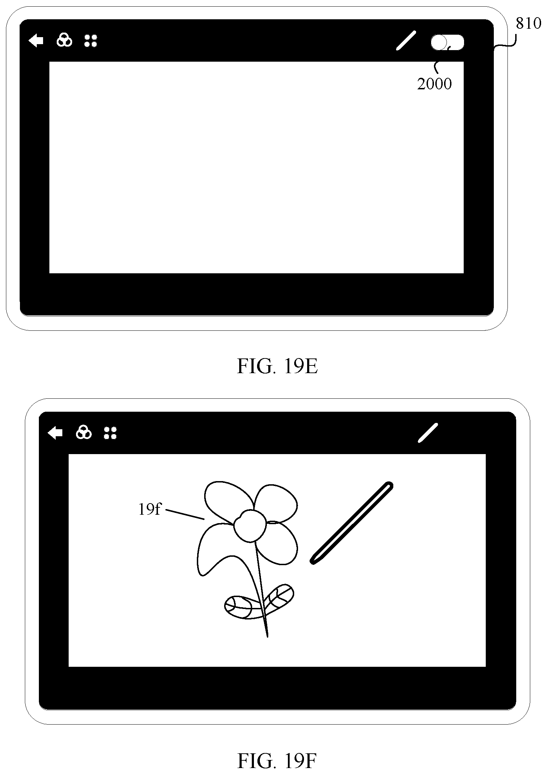

In some implementations, the function may be enabled by default. In some other implementations, the function may be enabled by the user. For example, the electronic device may include a function enable control, and the user may enable the function by using the function enable control. For example, FIG. 19E is a diagram of an interface according to an embodiment of this application. As shown in FIG. 19E, the electronic device may display the running interface 810 of the drawing application. The running interface 810 includes a function enable control 2000, and the user may perform an enable operation or the like on the function enable control 2000. In response to the operation of the user, the electronic device may enable the function of responding to a tap event, and/or a flick event, and/or a pinch event of the stylus for the drawing application. Certainly, in another embodiment, the function enable control may alternatively be located in another running interface of the drawing application or another display interface of the electronic device, for example, a running interface of the settings application. This is not specifically limited in this embodiment of this application.

In some embodiments, the user may further hold the stylus to implement contactless drawing on the electronic device. In this embodiment, the user may hold the stylus to move above the display of the electronic device. In a moving process, the electrode of the stylus may continuously transmit signals to the display of the electronic device. Correspondingly, after receiving the signals, the display may identify hover coordinates of the stylus on the display, draw an ink trace based on the hover coordinates that sequentially appear, and generate a picture, for example, a flower 19f shown in FIG. 19F.

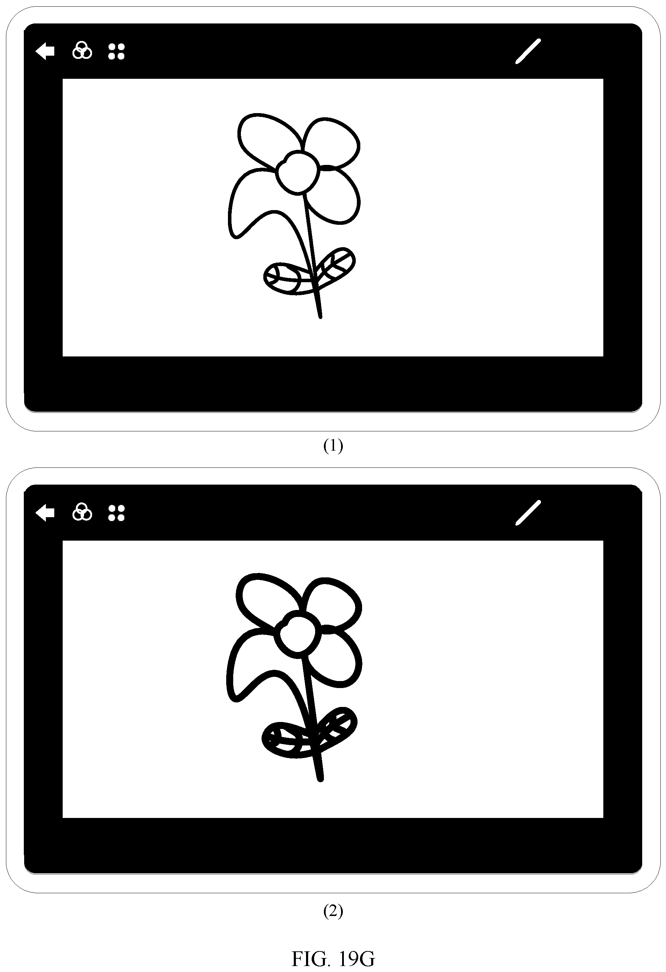

In some embodiments, similar to the foregoing solution, a style of the ink trace may also be determined based on a style of a brush selected by the user. For example, (1) and (2) in FIG. 19G are diagrams of pictures in different brush styles. A manner in which the user sets the brush style is not limited in this embodiment of this application. For example, the user may set the brush style by using the application interface shown above, or the user may set the brush style by adjusting a hover distance between the stylus and the display.

In some embodiments, the style of the ink trace may alternatively be determined based on one or more parameters of the ink trace. For example, the parameter of the ink trace may include but is not limited to one or more of an ink droplet size, an ink droplet density, an ink droplet intensity, and the like. Similarly, in this embodiment, the parameter of the ink trace may be default, or the user may change the setting of the parameter of the ink trace by using an application interface or the like. Alternatively, the parameter of the ink trace may be further determined based on one or more of the hover distance between the stylus and the display, a contactless moving speed of the stylus above the display, and the like.

In some implementations, one or more parameters of the ink trace may be negatively correlated with the hover distance. For example, a shorter hover distance indicates a larger ink droplet size, and/or a higher ink droplet density, and/or a higher ink droplet intensity. Certainly, in another implementation, one or more parameters of the ink trace may alternatively be positively correlated with the hover distance. For example, a longer hover distance indicates a larger ink droplet size, and/or a higher ink droplet density, and/or a higher ink droplet intensity.

In some implementations, one or more parameters of the ink trace may alternatively be negatively correlated with the contactless moving speed of the stylus above the display. For example, a lower moving speed indicates a larger ink droplet size, and/or a higher ink droplet density, and/or a higher ink droplet intensity. Alternatively, in another implementation, one or more parameters of the ink trace may be positively correlated with the hover distance. For example, a higher moving speed indicates a larger ink droplet size, and/or a higher ink droplet density, and/or a higher ink droplet intensity.

Similarly, in this embodiment, the user may also enable, in a manner shown in FIG. 19E, a function of responding to contactless drawing for the electronic device. After the function is enabled, the electronic device responds to the operation of the user and performs contactless drawing only when the user holds the stylus and moves the stylus above the display.

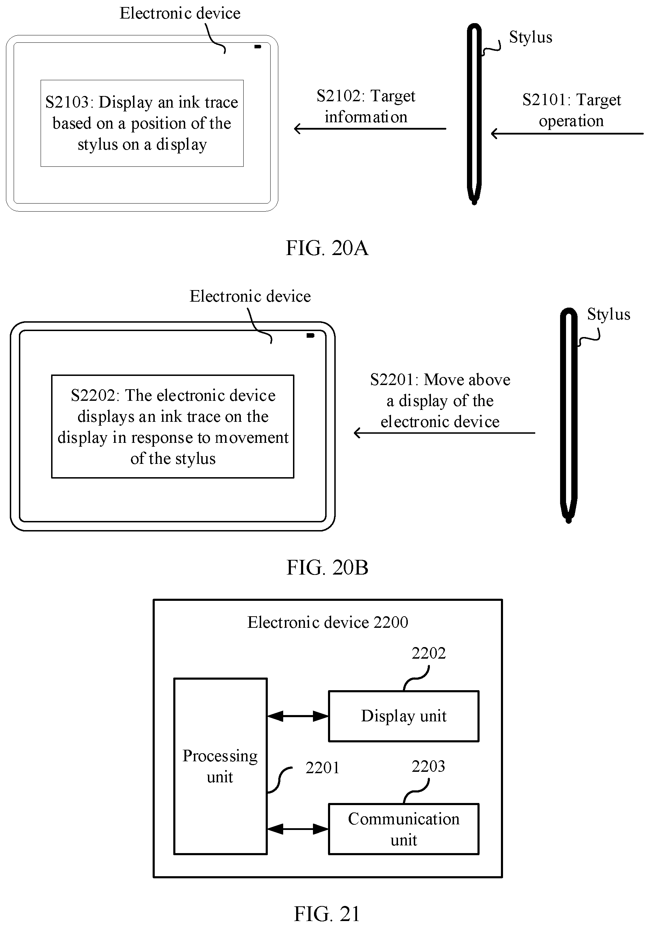

For example, FIG. 20A is a schematic flowchart of an interaction method according to an embodiment of this application. As shown in FIG. 20A, the method includes the following steps.

S2101: A stylus receives a target operation.

The target operation includes one of a tap operation, a flick operation, and a pinch operation.

S2102: The stylus sends target information to an electronic device in response to the target operation. Correspondingly, the electronic device receives the target information from the stylus.

The target information is generated based on the target operation. In some embodiments, assuming that the target operation is the tap operation, the target information may include information used to represent at least one of a tap event and a tap force corresponding to the tap operation. In some other embodiments, assuming that the target operation is the flick operation, the target information may include information used to represent at least one of a flick event, a flick force, a flick amplitude, and a flick direction corresponding to the flick operation. In some other embodiments, assuming that the target operation is the pinch operation, the target information includes information used to represent at least one of a pinch event and a pinch force corresponding to the pinch operation.

S2103: The electronic device displays an ink trace based on a position of the stylus on a display in response to the target information.

In some embodiments, when obtaining a hover coordinate of the stylus based on the position of the stylus on the display, the electronic device may display the ink trace in a target display area in response to the target information. The target display area may be related to the hover coordinate of the stylus. For the description of the hover coordinate of the stylus, refer to the foregoing description.

In some other embodiments, when the electronic device does not obtain a hover coordinate based on the position of the stylus on the display, the electronic device may randomly present the ink trace on the display in response to the target information.

In some implementations, a style of the ink trace may be determined based on a parameter of the ink trace. In some embodiments, a first parameter (one or more of an ink trace color, an ink droplet size, and an ink droplet intensity) of the ink trace may be related to a style of a brush used by the stylus. In some other embodiments, a second parameter (one or more of an ink trace range, an ink trace length, an ink trace direction, an ink droplet size, an ink droplet density, and an ink droplet intensity) of the ink trace may be related to the target operation received by the stylus. It may be understood that an example in which the first parameter is different from the second parameter is used in the foregoing embodiment. In another implementation, the first parameter may alternatively be the same as the second parameter.

For example, FIG. 20B is a schematic flowchart of another interaction method according to an embodiment of this application. As shown in FIG. 20B, the method includes the following steps.

S2201: A stylus moves above a display of an electronic device.

A connection is established between the stylus and the electronic device. For an implementation of establishing the connection, refer to the foregoing description. A distance between the stylus and the display of the electronic device is greater than a preset distance. It may be understood that, that the distance between the stylus and the display of the electronic device is greater than the preset distance means that the stylus moves above the display in a contactless manner, and that the stylus is not in contact with the display of the electronic device. The preset distance herein may be different from the preset distance described above. A specific value of the preset distance may be set by a developer based on an actual requirement. Optionally, the stylus may move above the display of the electronic device in the contactless manner based on a user operation.

S2202: The electronic device displays an ink trace on the display in response to the movement of the stylus.

In some embodiments, the electronic device may obtain at least one hover coordinate in response to the movement of the stylus, where the hover coordinate is a corresponding coordinate on the display during the movement of the stylus above the display; and the electronic device may display the ink trace on the display based on the at least one hover coordinate. In other words, the ink trace presented by the electronic device is related to the hover coordinate of the stylus. Optionally, a trajectory of the contactless movement of the stylus determines the hover coordinate of the stylus. Therefore, the ink trace presented by the electronic device may also be related to the trajectory of the contactless movement of the stylus.

Optionally, the electronic device may obtain the at least one hover coordinate based on a signal sent from an electrode of the stylus. Optionally, the display of the electronic device can receive the signal sent from the electrode of the stylus only when the distance between the stylus and the display is within a specific range. Therefore, when the stylus moves above the display of the electronic device, the distance between the stylus and the display of the electronic device may alternatively be greater than the preset distance and less than a preset distance a. The preset distance a needs to be greater than the preset distance.

In some implementations, a style of the ink trace may alternatively be determined based on a parameter of the ink trace. In some embodiments, a first parameter (one or more of an ink trace color, an ink droplet size, and an ink droplet intensity) of the ink trace may be related to a style of a brush used by the stylus. In some other embodiments, a third parameter (one or more of an ink droplet size, an ink droplet density, and an ink droplet intensity) of the ink trace may be related to the distance between the stylus and the display of the electronic device. It may be understood that an example in which the first parameter is different from the third parameter is used in the foregoing embodiment. In another implementation, the first parameter may alternatively be the same as the third parameter.

The foregoing mainly describes the solutions provided in embodiments of this application from the perspective of the methods. It may be understood that, to implement the foregoing functions, the electronic device and/or the stylus include/includes a corresponding hardware structure and/or software module for performing each of the functions. With reference to the units and algorithm steps described in embodiments disclosed in this application, embodiments of this application can be implemented in a form of hardware or hardware and computer software. Whether a function is performed by hardware or hardware driven by a computer depends on particular applications and design constraints of the technical solutions. A person skilled in the art may use different methods to implement the described functions for each particular application, but it should not be considered that the implementation goes beyond the scope of the technical solutions in embodiments of this application.

In embodiments of this application, the electronic device and/or the stylus may be divided into functional modules based on the foregoing method examples. For example, each functional module corresponding to each function may be obtained through division, or two or more functions may be integrated into one processing unit. The integrated unit may be implemented in a form of hardware, or may be implemented in a form of a software functional module. It should be noted that the unit division in embodiments of this application is an example, and is merely logical function division. There may be another division manner in actual implementation.

FIG. 21 is a diagram of a structure of an electronic device 2200 according to an embodiment of this application. The electronic device 2200 may be configured to implement the method performed by the electronic device in the foregoing method embodiments. For example, the electronic device 2200 may specifically include a processing unit 2201, a display unit 2202, and a communication unit 2203. The processing unit 2201 is configured to support the electronic device 2200 in performing a processing function of the electronic device in any one of FIG. 1 to FIG. 20B. The display unit 2202 is configured to support the electronic device 2200 in performing a display function of the electronic device in any one of FIG. 1 to FIG. 20B. The communication unit 2203 is configured to support the electronic device 2200 in performing a communication function of the electronic device in any one of FIG. 1 to FIG. 20B.

Optionally, the electronic device 2200 shown in FIG. 21 may further include a storage unit (not shown in FIG. 21), and the storage unit stores a program or instructions. When the processing unit 2201 executes the program or the instructions, the electronic device 2200 shown in FIG. 21 may be enabled to perform the method shown in the foregoing method embodiments.

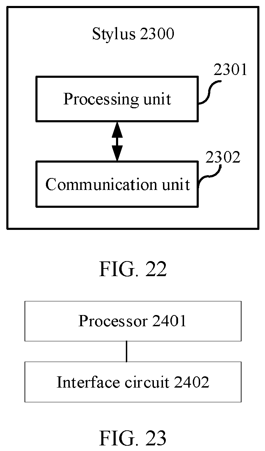

FIG. 22 is a diagram of a structure of a stylus 2300 according to an embodiment of this application. The stylus 2300 may be configured to implement the method performed by the stylus in the foregoing method embodiments. For example, the stylus 2300 may specifically include a processing unit 2301 and a communication unit 2302. The processing unit 2301 is configured to support the stylus 2300 in performing a processing function of the stylus in any one of FIG. 1 to FIG. 20B. The communication unit 2302 is configured to support the stylus 2300 in performing a communication function of the stylus in any one of FIG. 1 to FIG. 20B.

Optionally, the stylus 2300 shown in FIG. 22 may further include a storage unit (not shown in FIG. 22), and the storage unit stores a program or instructions. When the processing unit 2301 executes the program or the instructions, the stylus 2300 shown in FIG. 22 may be enabled to perform the method shown in the foregoing method embodiments.

For technical effects of the devices shown in FIG. 21 and FIG. 22, refer to the technical effects described in the foregoing method embodiments. Details are not described herein again. The processing unit in FIG. 21 and/or FIG. 22 may be implemented by a processor or a processor-related circuit component, and may be a processor or a processing module. The communication unit may be implemented by a transceiver or a transceiver-related circuit component, and may be a transceiver or a transceiver module. The display unit may be implemented by a display-related component.

An embodiment of this application further provides a chip system. As shown in FIG. 23, the chip system includes at least one processor 2401 and at least one interface circuit 2402. The processor 2401 and the interface circuit 2402 may be interconnected by a line. For example, the interface circuit 2402 may be configured to receive a signal from another apparatus. For another example, the interface circuit 2402 may be configured to send a signal to another apparatus (for example, the processor 2401). For example, the interface circuit 2402 may read instructions stored in a memory and send the instructions to the processor 2401. When the instructions are executed by the processor 2401, a device may be enabled to perform the steps performed by the electronic device or the stylus in the foregoing embodiments. Certainly, the chip system may further include other discrete devices. This is not specifically limited in this embodiment of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed and completed by a hardware processor, or may be performed and completed by using a combination of hardware in the processor and a software module.

An embodiment of this application further provides a computer storage medium. The computer storage medium stores computer instructions. When the computer instructions are run on a device, the device is enabled to perform the method in the foregoing method embodiments.

An embodiment of this application provides a computer program product. The computer program product includes a computer program or instructions. When the computer program or the instructions are run on a computer, the computer is enabled to perform the method in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the method in the foregoing method embodiments.

The device, the computer storage medium, the computer program product, and the chip provided in embodiments are all configured to perform the corresponding method provided above. Therefore, for beneficial effects that can be achieved, refer to the beneficial effects of the corresponding method provided above. Details are not described herein again.

The foregoing content is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An interaction method, applied to a system comprising an electronic device and a stylus, wherein the electronic device is equipped with a display, a connection is established between the electronic device and the stylus, and the method comprises:
receiving, by the stylus, a target operation, wherein the target operation comprises one of a tap operation, a flick operation, and a pinch operation;
sending, by the stylus, target information to the electronic device in response to the target operation, wherein the target information is generated based on the target operation; and
displaying, by the electronic device, an ink trace based on a position of the stylus on the display in response to the target information.

2. The method according to claim 1, wherein the target operation is the tap operation, and the target information comprises information used to represent at least one of a tap event and a tap force corresponding to the tap operation; or
the target operation is the pinch operation, and the target information comprises information used to represent at least one of a pinch event and a pinch force corresponding to the pinch operation; or
the target operation is the flick operation, and the target information comprises information used to represent at least one of a flick event, a flick force, a flick amplitude, and a flick direction corresponding to the flick operation.

3. The method according to claim 1 or 2, wherein the target operation is the tap operation or the pinch operation, and the ink trace is an ink patch; or the target operation is the flick operation, and the ink trace is an ink streak.

4. The method according to any one of claims 1 to 3, wherein displaying, by the electronic device, the ink trace based on the position of the stylus on the display in response to the target information comprises:
when a hover coordinate is obtained based on the position of the stylus on the display, displaying, by the electronic device, the ink trace in a target display area in response to the target information, wherein the target display area is related to the hover coordinate, and the hover coordinate is a corresponding coordinate on the display when the stylus hovers over the display to receive the target operation.

5. The method according to any one of claims 1 to 3, wherein displaying, by the electronic device, the ink trace based on the position of the stylus on the display in response to the target information comprises:
when no hover coordinate is obtained based on the position of the stylus on the display, randomly displaying, by the electronic device, the ink trace on the display in response to the target information, wherein the hover coordinate is a corresponding coordinate on the display when the stylus hovers over the display to receive the target operation.

6. The method according to any one of claims 1 to 5, wherein the ink trace comprises a plurality of ink droplets, a first parameter of the ink trace is related to a style of a brush used by the stylus, and the first parameter comprises one or more of an ink trace color, an ink droplet size, and an ink droplet intensity.

7. The method according to any one of claims 1 to 5, wherein the ink trace comprises a plurality of ink droplets, a second parameter of the ink trace is related to the target operation, and the second parameter comprises one or more of an ink trace range, an ink trace length, an ink trace direction, an ink droplet size, an ink droplet density, and an ink droplet intensity.

8. The method according to claim 7, wherein the target operation is the tap operation, a parameter of the tap operation comprises the tap force, and at least one of the ink trace range, the ink droplet size, the ink droplet density, and the ink droplet intensity of the ink trace is positively correlated with the tap force; or
the target operation is the pinch operation, a parameter of the pinch operation comprises the pinch force, and at least one of the ink trace range, the ink droplet size, the ink droplet density, and the ink droplet intensity of the ink trace is positively correlated with the pinch force; or
the target operation is the flick operation, a parameter of the flick operation comprises at least one of the flick amplitude and the flick force, and at least one of the ink trace length, the ink droplet size, the ink droplet density, and the ink droplet intensity of the ink trace is positively correlated with at least one of the flick amplitude and the flick force.

9. The method according to claim 7 or 8, wherein the target operation is the flick operation, and the ink trace direction of the ink trace is the same as the flick direction of the flick operation.

10. The method according to any one of claims 7 to 9, wherein one or more of the ink trace length, the ink droplet size, the ink droplet density, and the ink droplet intensity of the ink trace are related to a hover coordinate, and the hover coordinate is a corresponding coordinate on the display when the stylus hovers over the display to receive the target operation.

11. The method according to claim 10, wherein the target operation is the tap operation or the pinch operation, and the ink trace comprises a first ink trace and a second ink trace, wherein a distance between the first ink trace and the hover coordinate is less than a distance between the second ink trace and the hover coordinate, and an ink droplet size of the first ink trace is greater than an ink droplet size of the second ink trace, and/or an ink droplet density of the first ink trace is higher than an ink droplet density of the second ink trace, and/or an ink droplet intensity of the first ink trace is higher than an ink droplet intensity of the second ink trace.

12. The method according to claim 10, wherein the target operation is the flick operation, the hover coordinate comprises a first hover coordinate, the first hover coordinate is a hover coordinate when the stylus receives the flick operation and starts to flick, and the ink trace comprises a third ink trace and a fourth ink trace, wherein a distance between the third ink trace and the first hover coordinate is less than a distance between the fourth ink trace and the first hover coordinate, and an ink droplet size of the third ink trace is greater than an ink droplet size of the fourth ink trace, and/or an ink droplet density of the third ink trace is higher than an ink droplet density of the fourth ink trace, and/or an ink droplet intensity of the third ink trace is higher than an ink droplet intensity of the fourth ink trace.

13. The method according to any one of claims 1 to 12, wherein before sending, by the stylus, the target information to the electronic device in response to the target operation, the method further comprises:
displaying, by the electronic device, a running interface of a first application, wherein the stylus is configured to draw on the running interface.

14. An interaction method, applied to an electronic device comprising a display, wherein a connection is established between the electronic device and a stylus, and the method comprises:
receiving target information from the stylus, wherein the target information is generated based on a target operation on the stylus, and the target operation comprises one of a tap operation, a flick operation, and a pinch operation; and
displaying an ink trace based on a position of the stylus on the display in response to the target information.

15. The method according to claim 14, wherein the target operation is the tap operation, and the target information comprises information used to represent at least one of a tap event and a tap force corresponding to the tap operation; or
the target operation is the pinch operation, and the target information comprises information used to represent at least one of a pinch event and a pinch force corresponding to the pinch operation; or
the target operation is the flick operation, and the target information comprises information used to represent at least one of a flick event, a flick force, a flick amplitude, and a flick direction corresponding to the flick operation.

16. An interaction method, applied to a stylus, wherein a connection is established between the stylus and an electronic device, and the method comprises:
receiving a target operation, wherein the target operation comprises one of a tap operation, a flick operation, and a pinch operation; and
sending target information to the electronic device in response to the target operation, wherein the target information is used by the electronic device to display an ink trace based on a position of the stylus on a display of the electronic device.

17. The method according to claim 16, wherein the target operation is the tap operation, and the target information comprises information used to represent at least one of a tap event and a tap force corresponding to the tap operation; or
the target operation is the pinch operation, and the target information comprises information used to represent at least one of a pinch event and a pinch force corresponding to the pinch operation; or
the target operation is the flick operation, and the target information comprises information used to represent at least one of a flick event, a flick force, a flick amplitude, and a flick direction corresponding to the flick operation.

18. An interaction method, applied to a system comprising an electronic device and a stylus, wherein the electronic device is equipped with a display, a connection is established between the electronic device and the stylus, and the method comprises:
moving, by the stylus, above the display, wherein a distance between the stylus and the display is greater than a preset distance; and
displaying, by the electronic device, an ink trace on the display in response to the movement of the stylus.

19. The method according to claim 18, wherein displaying, by the electronic device, the ink trace on the display in response to the movement of the stylus comprises:
obtaining, by the electronic device, at least one hover coordinate in response to the movement of the stylus, wherein the hover coordinate is a corresponding coordinate on the display during the movement of the stylus above the display; and
displaying, by the electronic device, the ink trace on the display based on the at least one hover coordinate.

20. The method according to claim 19, wherein obtaining, by the electronic device, the at least one hover coordinate comprises:
obtaining, by the electronic device, the at least one hover coordinate based on a signal sent from an electrode of the stylus.

21. The method according to any one of claims 18 to 20, wherein the ink trace comprises a plurality of ink droplets, a first parameter of the ink trace is related to a style of a brush used by the stylus, and the first parameter comprises one or more of an ink trace color, an ink droplet size, and an ink droplet intensity.

22. The method according to any one of claims 18 to 21, wherein the ink trace comprises a plurality of ink droplets, a third parameter of the ink trace is related to a distance between the stylus and the display, and the third parameter comprises one or more of an ink droplet size, an ink droplet density, and an ink droplet intensity.

23. The method according to claim 22, wherein one or more of the ink droplet size, the ink droplet density, and the ink droplet intensity of the ink trace are negatively correlated with the distance between the stylus and the display.

24. An interaction method, applied to a display comprising an electronic device, wherein a connection is established between the electronic device and a stylus, and the method comprises:
obtaining at least one hover coordinate, wherein the hover coordinate is a corresponding coordinate on the display during movement of the stylus above the display; and
displaying an ink trace on the display in response to the at least one hover coordinate.

25. An electronic device, comprising a processor, a memory, a communication interface, and a display, wherein the memory, the communication interface, and the display are coupled to the processor, the communication interface is configured to communicate with another device, the memory is configured to store computer program code, the computer program code comprises computer instructions, and the processor reads the computer instructions from the memory, to enable the electronic device to perform the method performed by the electronic device according to any one of claims 1 to 13, or to enable the electronic device to perform the method according to claim 14 or 15, or to enable the electronic device to perform the method performed by the electronic device according to any one of claims 18 to 23, or to enable the electronic device to perform the method according to claim 24.

26. A stylus, comprising a processor, a memory, and a communication interface, wherein the memory and the communication interface are coupled to the processor, the communication interface is configured to communicate with another device, the memory is configured to store computer program code, the computer program code comprises computer instructions, and the processor reads the computer instructions from the memory, to enable the stylus to perform the method performed by the stylus according to any one of claims 1 to 13, or to enable the stylus to perform the method according to claim 16 or 17, or to enable the stylus to perform the method performed by the stylus according to any one of claims 18 to 23.

27. A computer-readable storage medium, wherein the computer-readable storage medium comprises a computer program or instructions, and when the computer program or the instructions are run on an electronic device, the electronic device is enabled to perform the method performed by the electronic device according to any one of claims 1 to 13, or the method according to claim 14 or 15, or the method performed by the electronic device according to any one of claims 18 to 23, or the method according to claim 24, or when the computer program or the instructions are run on a stylus, the stylus is enabled to perform the method performed by the stylus according to any one of claims 1 to 13, or the method according to claim 16 or 17, or the method performed by the stylus according to any one of claims 18 to 23.

28. A computer program product, wherein when the computer program product is run on a computer, the computer is enabled to perform the method performed by the electronic device according to any one of claims 1 to 13, or the method according to claim 14 or 15, or the method performed by the electronic device according to any one of claims 18 to 23, or the method according to claim 24, or the computer is enabled to perform the method performed by the stylus according to any one of claims 1 to 13, or the method according to claim 16 or 17, or the method performed by the stylus according to any one of claims 18 to 23.

29. An interaction system, comprising an electronic device and a stylus, wherein the electronic device is configured to perform the method performed by the electronic device according to any one of claims 1 to 13, and the stylus is configured to perform the method performed by the stylus according to any one of claims 1 to 13, or the electronic device is configured to perform the method performed by the electronic device according to any one of claims 18 to 23, and the stylus is configured to perform the method performed by the stylus according to any one of claims 18 to 23.
